(19) Europäisches Patentamt / European Patent Office / Office européen des brevets

(11) **EP 4 693 212 A1**

(12) **EUROPEAN PATENT APPLICATION**
published in accordance with Art. 153(4) EPC

(43) Date of publication:
**11.02.2026 Bulletin 2026/07**

(21) Application number: **24818358.4**

(22) Date of filing: **07.04.2024**

(51) International Patent Classification (IPC):
*G06T 19/20* (2011.01)

(52) Cooperative Patent Classification (CPC):
**G06T 13/40; G06T 17/205;** Y02T 90/00

(86) International application number:
**PCT/CN2024/086296**

(87) International publication number:
**WO 2024/250821 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.06.2023 CN 202310672720**

(71) Applicant: **Tencent Technology (Shenzhen) Company Limited**
**Shenzhen, Guangdong 518057 (CN)**

(72) Inventor: **ZHANG, Rong**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **DATA PROCESSING METHOD AND APPARATUS, DEVICE, AND MEDIUM**

(57) Embodiments of the present application provide a data processing method and apparatus, a device, and a medium. The method comprises: obtaining a 3D mesh model corresponding to a virtual object and an initial skin weight corresponding to a model vertex; merging a pair of polygons of a first shape in the 3D mesh model into a polygon of a second shape to obtain a candidate mesh model; obtaining half-edge structure data corresponding to the candidate mesh model, and traversing half edges in the half-edge structure data to obtain a collinear vertex path in the 3D mesh model; on the basis of the path direction of the collinear vertex path in the half-edge structure data, smoothing the initial skin weight corresponding to a model vertex in the collinear vertex path to obtain a skin update weight corresponding to the model vertex; and performing skin processing on the virtual object on the basis of the skin update weight corresponding to the model vertex in the 3D mesh model. According to the embodiments of the present application, the skin processing effect can be improved.

Obtain a 3D mesh model corresponding to a virtual object, and obtain initial skin weights corresponding to model vertexes in the 3D mesh model — S101

Merge a pair of polygons of a first shape in the 3D mesh model into a polygon of a second shape, to obtain a candidate mesh model, where two polygons of a first shape included in the pair of polygons of a first shape have a shared edge in the 3D mesh model, and the shared edge is removed during the merging — S102

Obtain a half-edge data structure corresponding to the candidate mesh model, and traverse half edges in the half-edge data structure to obtain a collinear vertex path in the 3D mesh model — S103

Perform smoothing processing on a first initial skin weight corresponding to a first model vertex included in the collinear vertex path based on a path direction of the collinear vertex path in the half-edge data structure, to obtain an updated skin weight corresponding to the model vertex — S104

Perform skinning processing on the virtual object based on the updates skin weight corresponding to the first model vertex in the 3D mesh model — S105

FIG. 3

**Description**

RELATED APPLICATION

This application claims priority to Chinese Patent Application No. 2023106727201, filed with the China National Intellectual Property Administration on June 8, 2023 and entitled "DATA PROCESSING METHOD AND APPARATUS, DEVICE, and MEDIUM".

FIELD OF THE TECHNOLOGY

This application relates to the field of Internet technologies, and in particular, to a skinning technology.

BACKGROUND OF THE DISCLOSURE

Skeleton skinning is a technology for binding a model vertex on a three-dimensional (3D) mesh model to a bone joint. Since a vertex on the 3D mesh model is usually controlled by a plurality of joints to varying degrees to generate movement, a skin weight needs to be assigned to the vertex on the 3D mesh model through the skeleton skinning technology. The skin weight may determine a degree of influence of actions of different joints on the movement of the vertex on the 3D mesh model.

Currently, in the field of virtual object production, an art technician needs to manually assign a skin weight to each vertex on a 3D mesh model based on experience and cognition thereof. The skin weight of each vertex may determine a movement posture of a 3D virtual object. Virtual objects involved in the field of virtual object production are increasingly diversified. The manually assigned skin weight based on experience and cognition may have a relatively large error, leading to cases such as clothing clipping, deformation, or tortuous wiring during movement of the virtual object, i.e., resulting in a relatively poor skinning processing effect of the virtual object.

SUMMARY

Embodiments of this application provide a data processing method and apparatus, a device, and a medium, so as to improve a skinning processing effect of a virtual object.

According to an aspect of the embodiments of this application, a data processing method is provided, performed by a computer device, and including:

obtaining a three-dimensional (3D) mesh model corresponding to a virtual object, and obtaining initial skin weights corresponding to model vertexes in the 3D mesh model;

merging a pair of polygons of a first shape in the 3D mesh model into a polygon of a second shape, to obtain a candidate mesh model, where the pair of polygons of the first shape have a shared edge in the 3D mesh model, and the shared edge is removed during the merging;

obtaining a half-edge data structure corresponding to the candidate mesh model, and traversing half edges in the half-edge data structure to obtain a collinear vertex path in the 3D mesh model;

performing, based on a path direction of the collinear vertex path in the half-edge data structure, smoothing processing on a first initial skin weight, among the initial skin weights, corresponding to a first model vertex included in the collinear vertex path, to obtain an updated skin weight corresponding to the first model vertex; and

performing skinning processing on the virtual object based on the updated skin weight corresponding to the first model vertex in the 3D mesh model.

According to an aspect of the embodiments of this application, a data processing apparatus is provided, including:

a model obtaining unit, configured to obtain a 3D mesh model corresponding to a virtual object, and obtain initial skin weights corresponding to model vertexes in the 3D mesh model;

a polygon merging unit, configured to merge a pair of polygons of a first shape in the 3D mesh model into a polygon of a second shape, to obtain a candidate mesh model, where the pair of polygons of the first shape have a shared edge in the 3D mesh model, and the shared edge is removed during the merging;

a collinear vertex obtaining unit, configured to obtain a half-edge data structure corresponding to the candidate mesh model, and traverse half edges in the half-edge data structure, to obtain a collinear vertex path in the 3D mesh model;

a weight smoothing processing unit, configured to perform, based on a path direction of the collinear vertex path in the half-edge data structure, smoothing processing on a first initial skin weight, among the initial skin weights, corresponding to a first model vertex included in the collinear vertex path, to obtain an updated skin weight corresponding to the first model vertex; and

a skinning processing unit, configured to perform skinning processing on the virtual object based on the updated skin weight corresponding to the first model vertex in the 3D mesh model.

According to an aspect of the embodiments of this application, a computer device is provided, including a memory and a processor, the memory being connected to the processor, the memory being configured to store a computer program, and the processor being configured to invoke the computer program, to cause the computer device to perform the method according to the foregoing aspect in the embodiments of this application.

According to an aspect of the embodiments of this application, a computer-readable storage medium is provided, having a computer program stored therein, the computer program being adapted to be loaded and executed by a processor, to cause a computer device having the processor to perform the method according to the foregoing aspect in the embodiments of this application.

According to an aspect of this application, a computer program product or a computer program is provided, the computer program product or the computer program including a computer instruction, the computer instruction being stored in a computer-readable storage medium. A processor of a computer device reads the computer instruction from the computer-readable storage medium, and the processor executes the computer instruction, so that the computer device performs the method according to the foregoing aspect.

In the embodiments of this application, a 3D mesh model corresponding to a virtual object and initial skin weights corresponding to model vertexes in the 3D mesh model are obtained, and a pair of polygons of a first shape in the 3D mesh model are merged into a polygon of a second shape, to obtain a candidate mesh model. The merged polygon of a second shape is searched for a collinear vertex path based on the half-edge data structure corresponding to the candidate mesh model, and smoothing processing is performed on a first initial skin weight corresponding to a first model vertex in the collinear vertex path based on a direction of the collinear vertex path, to obtain an updated skin weight corresponding to the first model vertex, thereby repairing an unsmooth skin weight in the 3D mesh model and improving smoothness of a skin weight of the first model vertex. Skinning processing is performed on the virtual object based on the updated skin weight corresponding to the first model vertex, so that the skinning processing effect of the virtual object may be improved.

BRIEF DESCRIPTION OF THE DRAWINGS

FIG. 1 is a schematic structural diagram of a data processing system according to an embodiment of this application.

FIG. 2 is a schematic diagram of searching for a collinear vertex path in a three-dimensional (3D) mesh model according to an embodiment of this application.

FIG. 3 is a schematic flowchart I of a data processing method according to an embodiment of this application.

FIG. 4 is a schematic structural diagram of a candidate mesh model according to an embodiment of this application.

FIG. 5 is a schematic diagram of a half-edge data structure according to an embodiment of this application.

FIG. 6 is a schematic diagram of a skin weight smoothing processing result corresponding to a collinear vertex path according to an embodiment of this application.

FIG. 7 is a schematic diagram of skinning processing according to an embodiment of this application.

FIG. 8 is a schematic flowchart II of a data processing method according to an embodiment of this application.

FIG. 9 is a schematic diagram showing calculation of a first shape evaluation coefficient corresponding to a different polygon of a first shape according to an embodiment of this application.

FIG. 10 is a schematic diagram showing calculation of a second shape evaluation coefficient corresponding to a candidate polygon according to an embodiment of this application.

FIG. 11 is a schematic diagram of a second shape evaluation coefficient corresponding to a different candidate polygon according to an embodiment of this application.

FIG. 12 is a schematic diagram of merging a pair of polygons of a first shape in a 3D mesh model according to an embodiment of this application.

FIG. 13 is a schematic diagram of an effect of skinning processing based on an updated skin weight according to an embodiment of this application.

FIG. 14 is a schematic diagram of a scenario of repairing a skin weight of a 3D mesh model according to an embodiment of this application.

FIG. 15 is a schematic structural diagram of a data processing apparatus according to an embodiment of this application.

FIG. 16 is a schematic structural diagram of a computer device according to an embodiment of this application.

DESCRIPTION OF EMBODIMENTS

Technical solutions in embodiments of this application are clearly and completely described below with reference to accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

For ease of understanding the subsequent content, related technologies involved in the embodiments of this application are described below.

Three-dimensional (3D) mesh model (which may be referred to as a 3D model for short): A 3D mesh is a form of discrete representation of a 3D model in the form of a combination of polygons. 3D mesh data may include vertexes, sides, and faces. In the field of games and 3D modeling, an object may be approximately represented through a mesh (for example, a triangular mesh or a quadrilateral mesh, where a triangle is a most basic element in a 3D model), and a process of creating an object through the mesh may be referred to as 3D modeling. The 3D model is usually hollow, and includes basically only closed surfaces. In terms of storage, a mesh includes a series of vertexes and has neither a "face" nor a "volume". Since a plane may be determined by 3 vertexes, and a solid may be determined by closed faces, without needing additional storage information, so as to achieve an objective of maximizing compression. Based on the above, the 3D mesh model may be considered as a 3D model composed of several polygons (for example, triangles), and only vertex data in the 3D mesh model needs to be stored.

Wiring: Lines formed by sides of a polygon in the 3D mesh model may be referred to as wiring. Wiring quality may directly affect an effect of the 3D mesh model.

Skinning: Skinning is a 3D animation term, which may also be used in a 3D game and is a production technology of 3D animation. Based on a model created in 3D model production software, a skeleton is bound to the model. The skeleton and the model are independent of each other. To enable the skeleton to drive the model to generate reasonable movement, the model needs to be bound to the skeleton. The technology is referred to as skinning. In the skinning process, a matrix (i.e., a skin weight or interchangeably, a skinning weight, configured for representing a weight of influence of each bone joint on a model vertex in the 3D mesh model) is finally outputted, and a size of the matrix is determined by a quantity of vertexes in the model and a quantity of bone joints corresponding to the model. For each vertex in the model, a sum of skin weights on all bone joints is 1.

Half-edge structure: The half-edge structure is a mesh representation method, which is a data structure with edges of a mesh as the basis. In the half-edge structure, it may be considered that each edge of the mesh is divided into two half edges in opposite directions, and adjoining edges may be queried quickly through the half-edge structure.

Convolution: The convolution may be considered that an output at a moment is a result of joint action (superposition) of a plurality of inputs. If a function participating in the convolution is considered as an indicator function of an interval, the convolution may further be considered as generalization of "moving average".

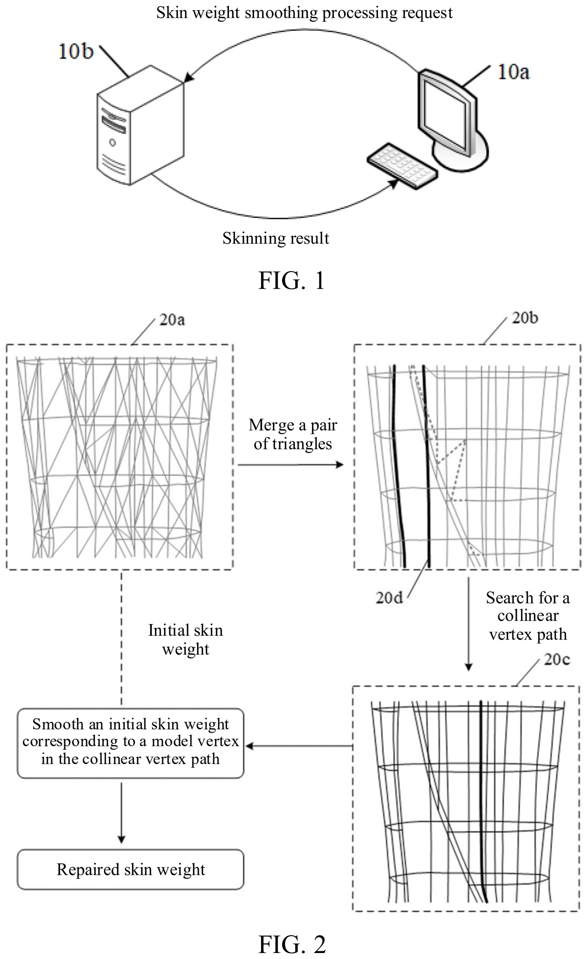

FIG. 1 is a schematic structural diagram of a data processing system according to an embodiment of this application. The data processing system may include a terminal device 10a and a server 10b. The terminal device 10a may be connected to the server 10b through a network. The network may be a wide area network, a local area network, or a combination of the wide area network and the local area network. Data transmission between the terminal device 10a and the server 10b is implemented in a wired or wireless manner. One or more terminal devices and servers may be arranged in the data processing system shown in FIG. 1. A quantity of terminal devices and a quantity of servers in the data processing system are not limited herein.

As shown in FIG. 1, the terminal device 10a in the data processing system may generate a skin weight smoothing processing request corresponding to the virtual object in response to a skin weight smoothing instruction for a virtual object, and then may transmit the skin weight smoothing processing request corresponding to the virtual object to the server 10b. The virtual object may be an unreal object produced through 3D software. In a game production scenario, the virtual object may include, but is not limited to, a game character (for example, a player character, a non-player character, or a prop), an ornament (for example, clothes) of the game character, or the like. In a video production scenario, the virtual object may include, but is not limited to, a virtual live streamer (or a broadcast object), an ornament of the virtual live streamer, or the like. A type of the virtual object is not limited in the embodiments of this application.

The server 10b may receive the skin weight smoothing processing request for the virtual object transmitted by the terminal device 10a, obtain a 3D mesh model corresponding to the virtual object and initial skin weights corresponding to model vertexes in the 3D mesh model, and merge adjoining polygons of a first shape in the 3D mesh model to form a polygon of a second shape. These polygons of a second shape may be searched for on collinear vertexes based on the half-edge data structure, to obtain a main wiring path (for example, a collinear vertex path formed by the searched collinear vertexes) that can best express a main model structure in original wiring of the 3D mesh model. Further, smoothing processing may be performed on the initial skin weight corresponding to a model vertex in the collinear vertex path, to automatically repair an unsmooth skin weight, and obtain a repaired skin weight (which may be referred to as an updated skin weight). Skinning processing is performed on the virtual object based on the updated skin weight, to obtain a skinning result corresponding to the virtual object. The collinear vertexes involved in the embodiments of this application may refer to model vertexes on the same smooth line in the 3D mesh model.

The terminal device 10a may further receive a skinning result for the virtual object returned by the server 10b, and may render a corresponding virtual object form based on the received skinning result, and display the virtual object form in the terminal device 10a. The foregoing virtual object form may be a virtual object having various posture types, or may be an animation for the virtual object, or the like.

The data processing method (which may be specifically a skin weight smoothing processing method) provided in the embodiments of this application may be performed by various computer devices. For example, the method may be independently performed by a terminal device, or may be independently performed by a server, or may be collaboratively performed by a terminal device and a server. Specifically, the data processing method provided in the embodiments of this application may be independently performed by the terminal device 10a. Alternatively, the terminal device 10a may transmit a skin weight smoothing processing request for the virtual object to the server 10b, and the server 10b performs the data processing method provided in the embodiments of this application based on the received skin weight smoothing processing request, or the like. The data processing method provided in the embodiments of this application may be applied to various scenarios, including but not limited to, the cloud technology, artificial intelligence, intelligent transportation, intelligent driving, and the like.

The server (for example, the server 10b) for performing the data processing method provided in the embodiments of this application may be an independent physical server, or may be a server cluster formed by a plurality of physical servers, or a distributed system, and may further be a cloud server that provides basic cloud computing services such as cloud service, a cloud database, cloud computing, a cloud function, cloud storage, a network service, cloud communication, a middleware service, a domain name service, a security service, a content delivery network (CDN), and a big data and artificial intelligence platform. A type of the server is not limited in this application. The terminal device (for example, the terminal device 10a) for performing the data processing method provided in the embodiments of this application may include but is not limited to an electronic device such as a smartphone, a tablet personal computer, a notebook computer, a palmtop computer, a mobile Internet device (MID), a wearable device (such as a smart watch or a smart bracelet), an intelligent voice interaction device (such as a smart speaker), a smart home appliance (such as a smart television), an on-board device, and an aircraft. A type of the terminal device is not limited in this application.

In one or more embodiments, the terminal device or the server may implement the data processing method provided in the embodiments of this application by running a computer program. For example, the computer program may be a native program or a software module in an operating system, or may be a native application (APP), i.e., a program that needs to be installed in the operating system to run, or may be a subprogram (which may alternatively be referred to as a mini program), i.e., a program that only needs to be downloaded into a browser environment to run, or may further be a subprogram that can be embedded in any APP. In a word, the foregoing computer program may be an APP, a module, or a plug-in of any form. For example, the computer program may be any automatic skinning tool, or may be any manual skinning post-processing tool.

In one or more embodiments, the data processing system shown in FIG. 1 may include a plurality of servers. The plurality of servers may form a blockchain system, and each server may be a blockchain node in the blockchain system. An information connection may exist between any blockchain nodes in the blockchain system, and information transmission may be performed between blockchain nodes through the foregoing information connection. Related data (for example, the 3D mesh model corresponding to the virtual object, the initial skin weight, the collinear vertex path, and the updated skin weight) involved in the data processing method provided in the embodiments of this application may be stored in a blockchain. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

FIG. 2 is a schematic diagram of searching for a collinear vertex path in a 3D mesh model according to an embodiment of this application. An example in which the method is performed by the server 10b in the data processing system shown in FIG. 1 is used to describe a process of searching for a collinear vertex path in a 3D mesh model in the embodiments of this application. In a game production scenario or a 3D model production scenario, a skin weight assigned to a model vertex in a 3D mesh model is prone to jump, i.e., a skin weight of each model vertex is unsmooth, causing a problem of shape deformation or tortuous wiring during movement of a virtual object, and further affecting a final display effect of the virtual object. In an actual application scenario, if a model vertex in a 3D mesh model corresponding to a virtual object has a jumping skin weight, a skin weight smoothing instruction for the virtual object may be initiated through a skinning tool installed in a terminal device 10a. After receiving the skin weight smoothing instruction for the virtual object, the terminal device 10a may generate a skin weight smoothing processing request corresponding to the virtual object, and transmit the skin weight smoothing processing request to a server 10b. Correspondingly, after receiving the skin weight smoothing processing request, the server 10b may obtain a 3D mesh model 20a corresponding to the virtual object and initial skin weights corresponding to model vertexes in the 3D mesh model 20a.

The virtual object may be a game character in the game production scenario, or any character in the 3D production scenario. The 3D mesh model 20a corresponding to the virtual object may be a 3D model approximately represented through triangular meshes. In other words, the 3D mesh model 20a may include several triangular meshes. A model vertex in the 3D mesh model 20a obtained by the server 10b has been assigned an initial skin weight. The initial skin weight may be a skin weight manually assigned by an art technician based on experience and cognition thereof, or may be a skin weight automatically assigned to each model vertex through a current skinning tool. An assignment manner of the initial skin weight is not limited in this application. A vertex of each triangular mesh included in the 3D mesh model 20a may be referred to as a model vertex of the 3D mesh model 20a.

To better smooth the initial skin weight corresponding to each model vertex in the 3D mesh model 20a, collinear (which may include a collinear longitude line and a collinear latitude line) model vertexes may be detected in the 3D mesh model 20a. If the 3D mesh model 20a is directly searched for a collinear vertex, a curve or an oblique line is easily obtained. Therefore, in the embodiments of this application, the server 10b may merge a pair of adjoining triangles in the 3D mesh model 20a into a quadrilateral, retain four sides of the quadrilateral, and delete diagonal lines of the quadrilateral, i.e., delete a shared edge between two triangles that have been merged into a quadrilateral, thereby obtaining a candidate mesh model 20b. In other words, the candidate mesh model 20b may be considered as an effect after the pair of adjoining triangles in the 3D mesh model 20a are merged. The candidate mesh model 20b may include several quadrilaterals formed by merging pairs of adjoining triangles in the 3D mesh model 20a.

The candidate mesh model 20b may further include a small portion of triangular meshes. For example, if some pairs of adjoining triangles in the 3D mesh model 20a cannot be merged into quadrilaterals (the triangles are merged into a triangular pyramid), these triangular meshes need to be retained in the candidate mesh model 20b. In other words, the shared edge between two triangles included in these pairs of adjoining triangles does not satisfy a removal condition. As shown in FIG. 2, a dashed line in the candidate mesh model 20b represents an edge in the 3D mesh model 20a that does not satisfy a removal condition, a bold solid line (such as a line 20d) in the candidate mesh model 20b represents a boundary edge in the 3D mesh model 20a (the boundary edge does not need to be detected, and may be directly retained in the candidate mesh model 20b), and a thin solid line (the remaining line except the dashed line and the bold solid line in the candidate mesh model 20b) in the candidate mesh model 20b represents a side of a retained quadrilateral. A model vertex in the 3D mesh model 20a is the same as a model vertex in the candidate mesh model 20b. In other words, merging of the pair of adjoining triangles in the 3D mesh model 20a does not affect the model vertex.

Further, the candidate mesh model 20b may be searched for a collinear vertex path. For example, the candidate mesh model 20b may be converted into a half-edge data structure, and a merged quadrilateral is searched for a collinear vertex path based on the half-edge data structure, to obtain a collinear vertex path in the 3D mesh model 20a. The candidate mesh model 20b may be searched for a plurality of collinear vertex paths. These collinear vertex paths may be shown in a mesh model 20c. For example, a bold solid line in the mesh model 20c may represent a collinear vertex path in the 3D mesh model 20a.

After the plurality of collinear vertex paths are obtained, an initial skin weight corresponding to a model vertex on each collinear vertex path may be extracted, and smoothing processing is performed on the initial skin weight corresponding to each model vertex on each collinear vertex path, to obtain a repaired skin weight. The repaired skin weight may also be referred to as an updated skin weight, to improve smoothness of the skin weight. A smoothing processing manner used when smoothing processing is performed on the initial skin weight may include but is not limited to mean filtering, median filtering, Gaussian filtering, bilateral filtering, and the like, which is not limited in this application. Skinning processing is performed on the virtual object based on the updated skin weight corresponding to the model vertex in the 3D mesh model 20a, so as to improve a skinning processing effect.

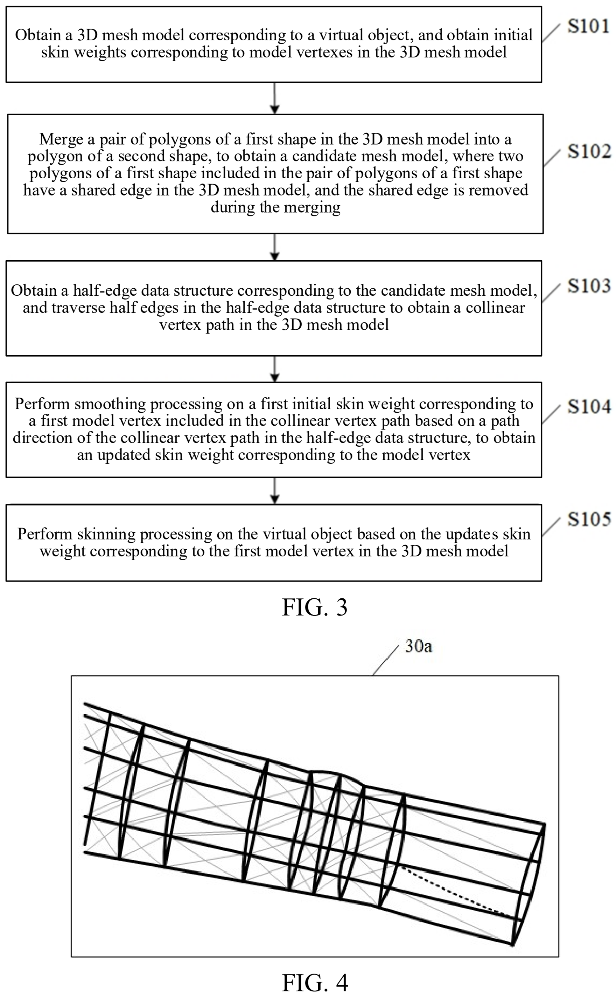

FIG. 3 is a schematic flowchart I of a data processing method according to an embodiment of this application. The data processing method may be performed by a computer device. The computer device may be the terminal device 10a in the data processing system shown in FIG. 1, or may be the server 10b in the data processing system shown in FIG. 1, which is not limited in this application. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. The data processing method may include the following operation S101 to operation S105.

Operation S101: Obtain a 3D mesh model corresponding to a virtual object, and obtain initial skin weights corresponding to model vertexes in the 3D mesh model.

In this embodiment of this application, the computer device may be installed with an application program for performing smoothing processing on a skin weight corresponding to a 3D mesh model. The application program may be any skinning tool or any manual skinning post-processing tool. A type of the application program is not limited in this application. The computer device may implement the smoothing processing on the skin weight corresponding to the 3D mesh model by running the application program.

In an actual application scenario, when performing skin weight smoothing processing, the computer device may obtain a 3D mesh model corresponding to a virtual object, and initial skin weights corresponding to model vertexes in the 3D mesh model. For example, one or more 3D mesh models assigned skin weights (different 3D mesh models may correspond to different virtual objects) may be pre-stored in a storage space (for example, a database or a local storage region of the foregoing application program). When the skin weight smoothing processing is performed, a corresponding 3D mesh model may be obtained from the storage space based on an actual requirement, and smoothing processing is performed on a skin weight corresponding to the 3D mesh model.

The 3D mesh model corresponding to the virtual object may be a 3D model approximately represented through a triangular mesh, or may be a 3D model approximately represented through a quadrilateral mesh, or may be a 3D model jointly represented through a triangular mesh and a quadrilateral mesh, or may be a 3D model approximately represented through another polygon mesh, which is not limited in this application. A vertex of each polygon mesh (for example, a triangular mesh or a quadrilateral mesh) in the 3D mesh model may be referred to as a model vertex. Therefore, the 3D mesh model may include a plurality of model vertexes. Each model vertex has a corresponding vertex position, and the vertex position may be described in a form of 3D position coordinates. A skin weight assigned to the model vertex in the 3D mesh model may be referred to as an initial skin weight. The skin weight may be a weight assigned when the model vertex in the 3D mesh model is bound to a specified bone during skinning processing. The skin weight may be configured for representing a weight of influence of a bone joint on the model vertex.

Operation S102: Merge a pair of polygons of a first shape in the 3D mesh model into a polygon of a second shape, to obtain a candidate mesh model, where two polygons of the first shape included in the pair of polygons of the first shape have a shared edge in the 3D mesh model, and the shared edge is removed during the merging.

Specifically, if the 3D mesh model is a 3D model approximately represented through a polygon mesh of a first shape, or is a 3D model represented through a combination of the polygon mesh of a first shape and a polygon mesh of a second shape. To be specific, if the 3D mesh model includes the polygon mesh of a first shape, two adjoining polygons of a first shape included in a pair of polygons of a first shape in the 3D mesh model may be merged to obtain a polygon of a second shape. A shared edge exists between two adjoining polygons of a first shape included in the pair of polygons of a first shape in the 3D mesh model. Further, during the merging, a diagonal line of the polygon of a second shape may be removed from the 3D mesh model. To be specific, a shared edge of two polygons of a first shape in the 3D mesh model that have been merged into the polygon of a second shape is deleted, to obtain the candidate mesh model.

During the merging of the pair of polygons of a first shape, each polygon of a first shape in the 3D mesh model can only be merged with at most one adjoining polygon of a first shape to form a polygon of a second shape. Therefore, when a polygon j of a first shape (which may be any polygon of a first shape in the 3D mesh model) in the 3D mesh model adjoins a plurality of polygons of a first shape, a polygon of a first shape needs to be selected from the plurality of adjoining polygons of a first shape to be merged with the polygon j of a first shape, which may be specifically represented as follows. If a polygon formed by an adjoining polygon of a first shape and the polygon j of a first shape is as similar as possible to a rectangle, the adjoining polygon of a first shape is selected to be merged with the polygon j of a first shape to form a final polygon of a second shape.

For example, if the polygon of a first shape that adjoins the polygon j of a first shape in the 3D mesh model includes a polygon 1 of a first shape, a polygon 2 of a first shape, and a polygon 3 of a first shape, the polygon 1 of a first shape and the polygon j of a first shape may be merged into a polygon q1, the polygon 2 of a first shape and the polygon j of a first shape may be merged into a polygon q2, and the polygon 3 of a first shape and the polygon j of a first shape may be merged into a polygon q3. If the polygon q1 among the polygon q1, the polygon q2, and the polygon q3 is a polygon that is the most similar to a rectangle, the polygon q1 may be used as a finally merged polygon of a second shape.

In some embodiments, if the polygon j of a first shape in the 3D mesh model and each polygon of a first shape that adjoins the polygon j of a first shape cannot be merged into a polygon of a second shape, or a polygon formed by the polygon j of a first shape and each polygon of a first shape that adjoins the polygon j of a first shape does not satisfy a merging condition (for a specific situation in which the merging condition is not satisfied, reference may be made to subsequent content), the polygon j of a first shape may be retained in the candidate mesh model.

The polygon of a first shape and the polygon of a second shape may refer to different types of polygon meshes. For example, the polygon of a first shape may be a triangular mesh, and the polygon of a second shape may be a quadrilateral mesh. For ease of understanding, this embodiment of this application is described through an example in which the polygon of a first shape is a triangular mesh and the polygon of a second shape is a quadrilateral mesh.

FIG. 4 is a schematic structural diagram of a candidate mesh model according to an embodiment of this application. A candidate mesh model 30a shown in FIG. 4 is an effect after triangles in a 3D mesh model are merged. Bold solid lines in the candidate mesh model 30a represent edges that are retained after adjoining triangles in the 3D mesh model are merged into quadrilaterals. A thin solid line in the candidate mesh model 30a represents an edge that has been deleted from the 3D mesh model, i.e., a shared edge between two triangles that have been merged into a quadrilateral. The candidate mesh model 30a essentially does not include the edge represented by the thin solid line, which is merely intended to visually present the edge that has been deleted from the 3D mesh model herein. The dashed line in the candidate mesh model 30a represents an edge that does not satisfy a removal condition (which may also be referred to as a deletion condition) in the 3D mesh model, for example, an edge that cannot be merged with an adjoining triangle into a quadrilateral. A diagonal line of a polygon of a second shape merged by two adjoining polygons of a first shape satisfies the removal condition. A boundary edge of the 3D mesh model may not need to be detected, and is directly retained in the candidate mesh model 30a. In this embodiment of this application, merging processing (which is equivalent to pruning on the 3D mesh model) is performed on a pair of polygons (a pair of triangles) of a first shape in the 3D mesh model, to improve subsequent search efficiency of a collinear vertex path.

If the 3D mesh model is a 3D model approximately represented through a polygon (quadrilateral) mesh of a second shape, the computer device does not need to perform operation S102 after obtaining the 3D mesh model, but directly performs operation S103 after performing operation S101.

Operation S103: Obtain a half-edge data structure corresponding to a candidate mesh model, and traverse half edges in the half-edge data structure to obtain a collinear vertex path in the 3D mesh model.

Specifically, an edge in the candidate mesh model may be converted into two half edges having opposite directions, to generate a half-edge data structure corresponding to the candidate mesh model, and then the merged polygon of a second shape may be searched for the collinear vertex path based on the half-edge data structure.

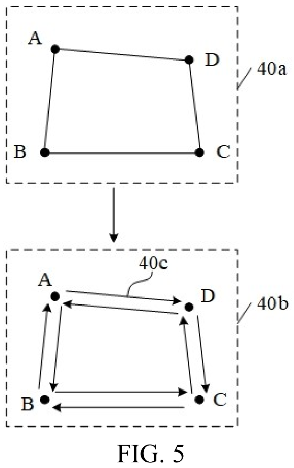

FIG. 5 is a schematic diagram of a half-edge data structure according to an embodiment of this application. A mesh model 40a shown in FIG. 5 may be a candidate mesh model obtained after triangles in a 3D mesh model are merged. The mesh model 40a includes a quadrilateral mesh. The mesh model 40a includes a model vertex A, a model vertex B, a model vertex C, a model vertex D, an edge AB, an edge BC, an edge CD, and an edge AD. Further, each edge in the mesh model 40a may be converted into two half edges having opposite directions, to obtain a half-edge data structure 40b. Each half edge in the half-edge data structure 40b may be regarded as a vector. As shown in FIG. 5, a half edge 40c may be represented as a boundary half edge in the half-edge data structure 40b. For the model vertex A, the half edge 40c is an outgoing half edge of the model vertex A. For the model vertex D, the half edge 40c is an incoming half edge of the model vertex D.

In one or more embodiments, an outgoing half edge in the half-edge data structure corresponding to the candidate mesh model may be regarded as a vector (having a direction), and searching for a next collinear vertex may be regarded as searching for a next outgoing half edge in the same direction. Through the idea of determining vectors in the same direction, all collinear vertex paths in the 3D mesh model may be found based on the half-edge data structure.

The idea of the collinear vertex path search algorithm may include traversing half edges in the half-edge data structure corresponding to the candidate mesh model, to search for a next outgoing half edge having a minimum included angle in the same direction. If a cosine of an included angle is greater than a cosine threshold (which may be manually set based on an actual requirement, for example, the cosine threshold may be set to 0.95), it is considered that the two half edges are collinear, and a path formed by the two collinear half edges is referred to as a candidate collinear path. The operations of the search algorithm may include but are not limited to: ① starting from any one boundary half edge in the half-edge data structure corresponding to the candidate mesh model, i.e., select any one boundary half edge in the half-edge data structure as a starting half edge; ② stopping a search for the candidate collinear path when no next outgoing half edge that satisfies a condition (a cosine of an included angle between the starting half edge and the next outgoing half edge having a minimum included angle in the same direction is greater than a cosine threshold) exists in the half-edge data structure, or a current path is accessed again (connected end to end); and marking half edges included in the candidate collinear path, to avoid secondary access to the half edges in the half-edge data structure; ③ repeating the foregoing operation ① and operation ②, until all half edges in the half-edge data structure are traversed; and ④ merging a plurality of candidate collinear paths. If two candidate collinear paths have the same starting point and a first outgoing half edge in the two candidate collinear paths are collinear, the two candidate collinear paths are merged to obtain all collinear vertex paths in the 3D mesh model.

Operation S104: Perform smoothing processing on a first initial skin weight corresponding to a first model vertex included in the collinear vertex path based on a path direction of the collinear vertex path in the half-edge data structure, to obtain an updated skin weight corresponding to the first model vertex.

Specifically, after all collinear vertex paths in the 3D mesh model are obtained, an initial skin weight corresponding to a model vertex included in each collinear vertex path may be obtained, and smoothing processing is performed on the initial skin weight corresponding to the model vertex included in the collinear vertex path based on a path direction of the collinear vertex path in the half-edge data structure, to automatically repair the initial skin weight corresponding to the model vertex in the 3D mesh model and obtain an updated skin weight corresponding to each model vertex. In the embodiments of this application, a smoothing processing manner used when smoothing processing is performed on the initial skin weight may include but is not limited to mean filtering, median filtering, Gaussian filtering, bilateral filtering, and the like, which is not limited in this application.

In one or more embodiments, smoothing processing may be performed on the initial skin weight through mean filtering. In this case, the smoothing processing process may include but is not limited to: obtaining a smoothing window corresponding to the 3D mesh model after all collinear vertex paths in the 3D mesh model are obtained; sliding the smoothing window on the collinear vertex path based on a path direction of the collinear vertex path in the half-edge data structure, to obtain a weighted average of initial skin weights corresponding to model vertexes covered by the smoothing window; and determining the weighted average as an updated skin weight corresponding to a central vertex covered by the smoothing window.

The foregoing smoothing window may be regarded as a one-dimensional convolution kernel (which may also be considered as a mean filter). One-dimensional average convolution is performed on the initial skin weight corresponding to each model vertex included in the collinear vertex path through the smoothing window, to obtain the updated skin weight corresponding to each model vertex included in the collinear vertex path.

For example, it is assumed that a size of the smoothing window is 5, i.e., a size of the one-dimensional convolution kernel is 5 (which may be denoted as kernel_size = 5). In other words, for the initial skin weight corresponding to each model vertex included in the collinear vertex path, sliding average is performed by using 5 as the size of the smoothing window, to obtain the updated skin weight corresponding to each model vertex. The process of calculating the updated skin weight may be shown as the following Equation (1):

$$w_i' = (w_{i-2} + w_{i-1} + w_i + w_{i+1} + w_{i+2})/\text{kernel\_size} \quad (1)$$

where $w_i$ in Equation (1) represents an initial skin weight (i.e., an initial skin weight on which smoothing processing is to be performed currently) corresponding to an $i^{th}$ model vertex in a collinear vertex path, $w_i'$ represents an updated skin weight obtained after the smoothing processing is performed on the initial skin weight corresponding to the $i^{th}$ model vertex, and $w_{i-2}$, $w_{i-1}$, $w_{i+1}$, and $w_{i+2}$ represent initial skin weights respectively corresponding to two model vertexes before and after the $i^{th}$ model vertex in a direction of a collinear vertex path to which the $i^{th}$ model vertex belongs. In other words, by sliding the smoothing window on the collinear vertex path, an average value of initial skin weights corresponding to the model vertexes covered by the smoothing window is used as an updated skin weight corresponding to the central vertex covered by the smoothing window. The central vertex herein may refer to a model vertex in a central position among all model vertexes covered by the smoothing window.

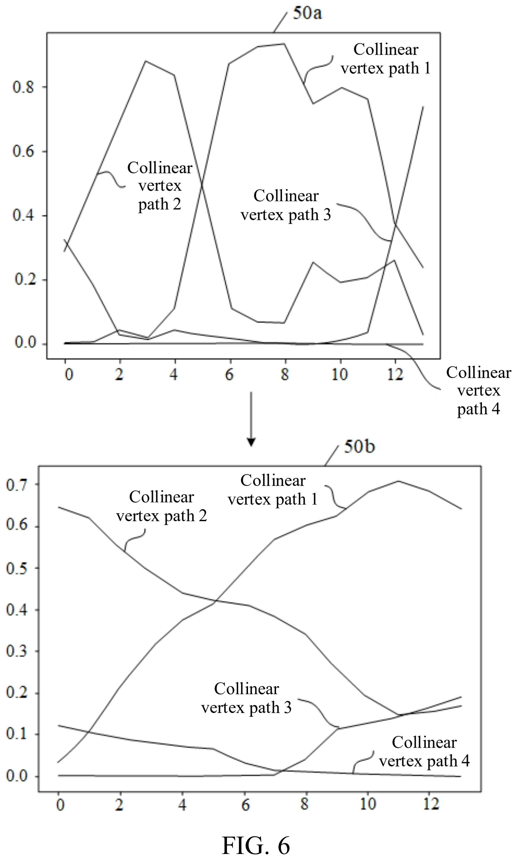

FIG. 6 is a schematic diagram of a skin weight smoothing processing result corresponding to a collinear vertex path according to an embodiment of this application. As shown in FIG. 6, it is assumed that a total of 4 collinear vertex paths are found in a 3D mesh model based on a half-edge data structure, which are respectively denoted as a collinear vertex path 1, a collinear vertex path 2, a collinear vertex path 3, and a collinear vertex path 4. An initial skin weight distribution corresponding to a model vertex included in each of the four collinear vertex paths is shown in statistical information 50a. A horizontal axis in the statistical information 50a represents a serial number of a model vertex (for example, a first model vertex or a second model vertex) in a direction along the collinear vertex path, and a longitudinal axis in the statistical information 50a represents an initial skin weight corresponding to a model vertex included in the collinear vertex path. Smoothing processing is performed on the initial skin weight corresponding to the model vertex included in each of the four collinear vertex paths through a smoothing window, to obtain an updated skin weight corresponding to each model vertex. A distribution of the updated skin weight corresponding to the model vertex included in each of the 4 collinear vertex paths is shown in statistical information 50b. Information represented by a horizontal axis and a longitudinal axis in the statistical information 50b is the same as the information represented by the horizontal axis and the longitudinal axis in the foregoing statistical information 50a. As shown in FIG. 6, after the smoothing processing is performed on the initial skin weight corresponding to the model vertex through mean filtering, each model vertex in the collinear vertex path may have a smoother skin update weight, thereby improving skin smoothness.

In one or more embodiments, smoothing processing may be performed on the initial skin weight through Gaussian filtering. In this case, the smoothing processing process may include but is not limited to: obtaining a smoothing filter corresponding to the 3D mesh model after all collinear vertex paths in the 3D mesh model are obtained, and obtaining a neighborhood corresponding to each model vertex included in the collinear vertex path, a quantity of vertexes in the neighborhood being associated with a size of the smoothing filter, where the smoothing filter herein may be a Gaussian filter (which may also be regarded as a convolution kernel); performing filtering processing on an initial skin weight corresponding to a model vertex p (any one model vertex in the collinear vertex path) in the collinear vertex path, and an initial skin weight corresponding to a model vertex in a neighborhood corresponding to the model vertex p through the smoothing filter based on the path direction of the collinear vertex path in the half-edge data structure, to obtain a weighted average weight; and determining the weighted average weight as the updated skin weight corresponding to the model vertex p.

For example, assuming that a size of the smoothing filter is 5 (which may also be denoted as kernel_size = 5), a corresponding parameter thereof may be represented as $(\gamma_1, \gamma_2, \gamma_3, \gamma_4, \gamma_5)$. Then a process of performing weight smoothing processing on each model vertex included in the collinear vertex path through the smoothing filter may be shown in the following Equation (2):

$$w'_i = (\gamma_1 w_{i-2} + \gamma_2 w_{i-1} + \gamma_3 w_i + \gamma_4 w_{i+1} + \gamma_5 w_{i+2})/\text{kernel\_size} \quad (2)$$

where $w_i$ in Equation (2) represents an initial skin weight (for example, an initial skin weight corresponding to an $i^{th}$ model vertex in the collinear vertex path, where the $i^{th}$ model vertex herein may be the foregoing model vertex p) on which smoothing processing is to be performed currently in the collinear vertex path. In this case, a neighborhood of the $i^{th}$ model vertex (such as the model vertex p) may include an $(i-2)^{th}$ model vertex, an $(i-1)^{th}$ model vertex, an $(i+1)^{th}$ model vertex, and an $(i+2)^{th}$ model vertex. When the smoothing processing is performed on the initial skin weight corresponding to the $i^{th}$ model vertex through the smoothing filter, a weighted averaging operation may be performed on the $i^{th}$ model vertex and each model vertex in the neighborhood thereof through a parameter of the smoothing filter based on an order of the $i^{th}$ model vertex and the model vertex in the neighborhood thereof in a direction of the collinear vertex path, to obtain an updated skin weight corresponding to the $i^{th}$ model vertex in the collinear vertex path.

In this way, smoothing processing is performed on the initial skin weight corresponding to the model vertex p through Gaussian filtering based on the initial skin weight corresponding to the model vertex p in the collinear vertex path and an initial skin weight corresponding to a model vertex in a corresponding neighborhood thereof, to obtain a smoother skin update weight, thereby improving skin smoothness.

Operation S105: Perform skinning processing on the virtual object based on the updated skin weight corresponding to the first model vertex in the 3D mesh model.

Specifically, an object skeleton corresponding to the virtual object is obtained, and a bone transformation parameter corresponding to a bone joint included in the object skeleton is obtained. An updated vertex position corresponding to the model vertex in the 3D mesh model is determined based on an initial vertex position corresponding to the model vertex in the 3D mesh model, the updated skin weight, and the bone transformation parameter. The object skeleton is bound to the 3D mesh model based on the updated vertex position corresponding to the model vertex in the 3D mesh model, to obtain a skinning result corresponding to the virtual object, and then the virtual object may be rendered based on the skinning result, to obtain and display a virtual object form. The skinning processing involved in this application may be linear blending skinning (LBS), or may be another skinning manner. A specific manner of the skinning processing is not limited in the embodiments of this application.

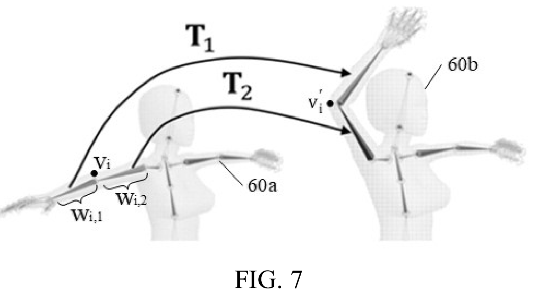

The skinning processing of the virtual object is described below by using the LBS manner as an example. In a process of making an animation for the 3D mesh model, assuming that a 3D mesh model corresponding to a virtual object is a human model including 10000 model vertexes, the 3D mesh model may present 80 forms. To display various actions of the virtual object, positions of 10000×80 model vertexes need to be stored, which consumes a lot of storage space. However, for the LBS, a position of each model vertex may be calculated through rigid body rotation and a skin weight. In this way, the storage space of the 3D mesh model during skinning processing may be greatly reduced. FIG. 7 is a schematic diagram of skinning processing according to an embodiment of this application. As shown in FIG. 7, assuming that a virtual object is a character in a game, an initial vertex position corresponding to a vertex (a model vertex) at an elbow of the character may be denoted as $v_i$. The position of the vertex at the elbow is affected by a forearm joint and an upper arm joint, and magnitudes of influence are respectively denoted as $w_{i,1}$ and $w_{i,2}$. A final position (an updated vertex position) of the vertex at the elbow may be obtained by weighting a rotation T of two joints of the forearm and the upper arm. The process of calculating the updated vertex position corresponding to the vertex at the elbow may be shown in the following Equation (3):

$$v_i' = \sum_{k=1}^{n\_bones} w_{i,k} T_k v_i \qquad (3)$$

where $v_i$ in Equation (3) represents an initial vertex position corresponding to the vertex at the elbow of the virtual object, and $w_{i,k}$ represents an updated skin weight corresponding to the vertex at the elbow. As shown in FIG. 7, $w_{i,1}$ represents a weight of influence of the forearm joint on the vertex at the elbow, $w_{i,2}$ represents a weight of influence of the upper arm joint on the vertex at the elbow, n_bones represents a quantity of bone joints associated with the position of the vertex at the elbow, where a value of n_bones corresponding to the vertex at the elbow herein may be 2, $v_i'$ represents an updated vertex position corresponding to the vertex at the elbow of the virtual object, and $T_k$ represents a bone transformation parameter corresponding to the vertex at the elbow, i.e., a rotation of bone joints of a forearm joint and an upper arm joint. As shown in FIG. 7, T1 represents a rotation of the forearm joint, i.e., a bone transformation parameter of the forearm joint, and T2 represents a rotation of the upper arm joint, i.e., a bone transformation parameter of the upper arm joint. As shown in FIG. 7, an initial vertex position corresponding to the vertex at the elbow is shown as the position $v_i$ in a form 60a of the virtual object. Skinning processing is performed on the virtual object based on the updated skin weight after the smoothing processing, and the updated vertex position obtained through calculation may be shown as the position $v_i'$ in a form 60b of the virtual object.

In this way, skinning processing is performed on the virtual object based on the updated skin weight corresponding to the model vertex through the LBS, so that it may be ensured that an obtained skinning effect is more realistic and natural, and a storage space of the 3D mesh model during the skinning processing may be reduced.

In the embodiments of this application, a 3D mesh model corresponding to a virtual object and initial skin weights corresponding to model vertexes in the 3D mesh model are obtained, and a pair of polygons of a first shape in the 3D mesh model are merged into a polygon of a second shape, to obtain a candidate mesh model. The polygon of a second shape is searched for a collinear vertex path based on the half-edge data structure corresponding to the candidate mesh model, and smoothing processing is performed on an initial skin weight corresponding to a model vertex in the collinear vertex path based on a direction of the collinear vertex path, to obtain an updated skin weight, thereby repairing an unsmooth skin weight in the 3D mesh model and improving smoothness of a skin weight of the model vertex. Skinning processing is performed on the virtual object based on the updated skin weight corresponding to the model vertex, so that the skinning processing effect of the virtual object may be improved.

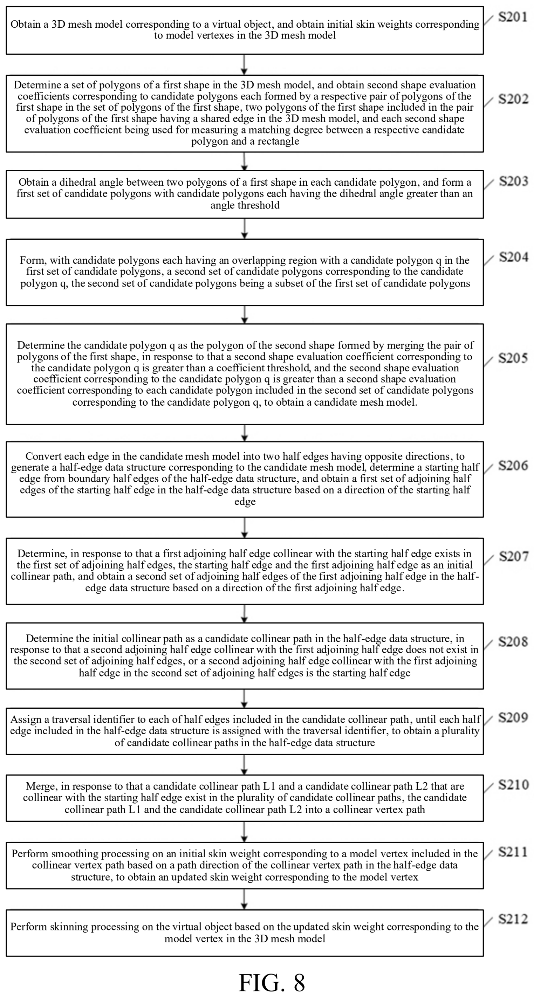

FIG. 8 is a schematic flowchart II of a data processing method according to an embodiment of this application. The data processing method may be performed by a computer device. The computer device may be the terminal device 10a in the data processing system shown in FIG. 1, or may be the server 10b in the data processing system shown in FIG. 1, which is not limited in this application.

In some embodiments, the method may include operation S201: Obtain a 3D mesh model corresponding to a virtual object, and obtain initial skin weights corresponding to model vertexes in the 3D mesh model.

For a specific implementation process of operation S201, reference may be made to operation S101 in the foregoing embodiment corresponding to FIG. 3. Details are not described herein again.

In some embodiments, the method may further include operation S202: Determine a set of polygons of a first shape in the 3D mesh model, and obtain second shape evaluation coefficients corresponding to candidate polygons each formed by a respective pair of polygons of the first shape in the set of polygons of the first shape, two polygons of the first shape included in the pair of polygons of the first shape having a shared edge in the 3D mesh model, and each second shape evaluation coefficient being used for measuring a matching degree between a respective candidate polygon and a rectangle.

Specifically, a set of polygons of a first shape may be formed through the polygons of a first shape in the 3D mesh model. The set of polygons of a first shape may include all of the polygons of a first shape in the 3D mesh model, or may include only a polygon of a first shape in a specified model region of the 3D mesh model. For example, a user may specify a vertex region (which may be referred to as a to-be-processed vertex region for short) in the 3D mesh model on which skin weight smoothing processing needs to be performed. In this way, a computer device only needs to repair a skin weight corresponding to a model vertex in the to-be-processed vertex region, without needing to repair another model vertex in the 3D mesh model. In one or more embodiments, the 3D mesh model and a model region selection control may be displayed in a skinning processing page of the virtual object. In response to a trigger operation through the model region selection control, a model region selected by the trigger operation is determined as a to-be-processed vertex region in the 3D mesh model. The set of polygons of a first shape is formed through the polygons of a first shape included in the to-be-processed vertex region. In this way, flexibility of the skin weight smoothing processing is improved, and smoothing processing is performed on the skin weight corresponding to the model vertex in the specified region in the 3D mesh model based on an actual requirement of the user, to save related processing resources, and ensure that a skinning requirement of the user for the virtual object is met.

After the set of polygons of a first shape corresponding to the 3D mesh model is obtained, a candidate polygon formed by each group of adjoining polygons of a first shape (i.e., two polygons of a first shape included in each pair of polygons of a first shape) in the set of polygons of a first shape may be added to a third set of candidate polygons. A vertex set corresponding to a candidate polygon q (which may be considered as any one candidate polygon in the third set of candidate polygons) in the third set of candidate polygons is obtained, and a first shape evaluation coefficient (for ease of understanding, the first shape evaluation coefficient may be denoted as $\alpha$) corresponding to each of a plurality of polygons of a first shape formed by model vertexes in the vertex set is obtained. The first shape evaluation coefficient is used for measuring a matching degree between the polygon (for example, a triangle) of a first shape and an equilateral polygon (for example, an equilateral triangle). Further, a second shape evaluation coefficient (for ease of understanding, the second shape evaluation coefficient may be denoted as $\beta$) corresponding to the candidate polygon q may be determined based on the first shape evaluation coefficient corresponding to each of the plurality of polygons of a first shape formed by the model vertexes in the vertex set. The second shape evaluation coefficient is used for measuring a matching degree between the candidate polygon and the rectangle.

In one or more embodiments, the process of obtaining the first shape evaluation coefficient corresponding to the polygon of a first shape may include: obtaining a polygon j of a first shape from the plurality of polygons of a first shape formed by the model vertexes included in the vertex set; obtaining a polygon area corresponding to the polygon j of a first shape, and obtaining a sum of squares of side lengths corresponding to the polygon j of a first shape; and determining a first shape evaluation coefficient corresponding to the polygon j of a first shape based on a ratio of the polygon area to the sum of squares of side lengths.

A description is provided below by using an example in which the polygon of a first shape in the 3D mesh model is a triangle. In this case, the first shape evaluation coefficient $\alpha$ may be used for measuring a matching degree between a triangular mesh in the 3D mesh model and an equilateral triangle. Assuming that the polygon j of a first shape may be denoted as a triangle ABC, the first shape evaluation coefficient $\alpha$ corresponding to the polygon j of a first shape may be shown in the following Equation (4):

$$\alpha(\text{ABC}) = 2\sqrt{3}\,\frac{\overrightarrow{\text{CA}}\overrightarrow{\text{CB}}\vec{\text{n}}}{\|\text{CA}\|^2 + \|\text{AB}\|^2 + \|\text{BC}\|^2} \qquad (4)$$

where $\alpha(\text{ABC})$ in Equation (4) represents the first shape evaluation coefficient corresponding to the polygon j (namely the triangle ABC) of a first shape, and $\overrightarrow{\text{CA}}\overrightarrow{\text{CB}}\vec{\text{n}}$ may be used for representing an area (a polygon area) corresponding to the polygon j (the triangle ABC) of a first shape. In other words, an area of the triangle ABC may be a dot product between any two adjacent edge vectors in the triangle ABC and a normal $\vec{\text{n}}$ of a plane CAB on which the edge vectors are located. For example, a dot product between a vector $\overrightarrow{\text{CA}}$ and a vector CB and the normal $\vec{\text{n}}$ of the plane CAB in Equation (4) may be used for representing the area of the triangle ABC. $\|\text{CA}\|$ represents a modulus of a vector $\overrightarrow{\text{CA}}$, i.e., a side length CA in the polygon j (the triangle ABC) of a first shape, and $\|\text{CA}\|^2 + \|\text{AB}\|^2 + \|\text{BC}\|^2$ represents a sum of squares of side lengths corresponding to the polygon j (the triangle ABC) of a first shape.

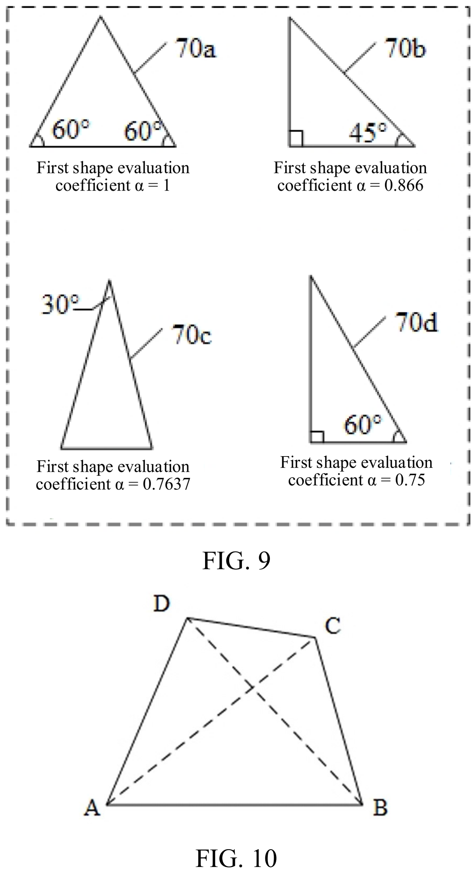

FIG. 9 is a schematic diagram showing calculation of a first shape evaluation coefficient corresponding to a different polygon of a first shape according to an embodiment of this application. As shown in FIG. 9, a first shape evaluation coefficient $\alpha$ corresponding to an equilateral triangle 70a is equal to 1, a first shape evaluation coefficient $\alpha$ corresponding to a right triangle 70b with an angle of 45° (degrees) is equal to 0.866, a first shape evaluation coefficient $\alpha$ corresponding to an isosceles triangle 70c with three angles of 30°, 75°, and 75° in sequence is equal to 0.7637, and a first shape evaluation coefficient $\alpha$ corresponding to a right triangle 70d with angles of 30° and 60° in sequence is equal to 0.75. Different types of polygons shown in FIG. 9 are merely examples of the types of the polygons of a first shape. In the embodiments of this application, the first shape evaluation coefficient corresponding to each triangle may be calculated through the foregoing Equation (4).

In this way, in the foregoing manner, the first shape evaluation coefficient corresponding to the polygon of a first shape is calculated based on the polygon area and the sum of squares of side lengths corresponding to the polygon of a first shape, so as to ensure that the calculated first shape evaluation coefficient can accurately reflect a matching degree between the polygon of a first shape and an equilateral polygon. Correspondingly, the second shape evaluation coefficient corresponding to the candidate polygon is determined based on the first shape evaluation coefficient, which helps ensure accuracy of the second shape evaluation coefficient.

The first shape evaluation coefficient $\alpha$ of one polygon (a triangle) of a first shape is uniquely determined, i.e., one polygon of a first shape uniquely corresponds to one first shape evaluation coefficient. A value range of the first shape

evaluation coefficient $\alpha$ is 0 to 1 (a maximum value is 1). A larger first shape evaluation coefficient $\alpha$ indicates that the polygon of a first shape is as similar as possible to an equilateral triangle. A first shape evaluation coefficient $\alpha$ corresponding to each of a plurality of polygons of a first shape divided by any candidate polygon (such as a candidate polygon q) in a third set of candidate polygons is calculated, and then a second shape evaluation coefficient $\beta$ corresponding to the candidate polygon q is determined based on the first shape evaluation coefficient $\alpha$ corresponding to each of the plurality of polygons of a first shape. For example, when the polygon of a first shape is a triangle, and the candidate polygon is a quadrilateral, one candidate polygon may include 4 triangles, and then the second shape evaluation coefficient $\beta$ of the candidate polygon may be calculated based on a first shape evaluation coefficient $\alpha$ corresponding to each of the four triangles.

In one or more embodiments, assuming that the candidate polygon q is a quadrilateral, a plurality of polygons of a first shape formed by model vertexes in a vertex set corresponding to the candidate polygon q include a triangle t1, a triangle t2, a triangle t3, and a triangle t4. The process of obtaining the second shape evaluation coefficient corresponding to the candidate polygon q (any candidate polygon in the third set of candidate polygons) may include: obtaining a first coefficient product of a first shape evaluation coefficient corresponding to the triangle t1 and a first shape evaluation coefficient corresponding to the triangle t2, and obtaining a second coefficient product of a first shape evaluation coefficient corresponding to the triangle t3 and a first shape evaluation coefficient corresponding to the triangle t4; and determining a ratio of the second coefficient product to the first coefficient product as the second shape evaluation coefficient corresponding to the candidate polygon q, the first shape evaluation coefficients corresponding to the triangle t1 and the triangle t2 being greater than or equal to the first shape evaluation coefficients corresponding to the triangle t3 and the triangle t4. For example, the first shape evaluation coefficients respectively corresponding to the triangle t1, the triangle t2, the triangle t3, and the triangle t4 in descending order are: the first shape evaluation coefficient of the triangle t1, the first shape evaluation coefficient of the triangle t2, the first shape evaluation coefficient of the triangle t3, and the first shape evaluation coefficient of the triangle t4.

FIG. 10 is a schematic diagram showing calculation of a second shape evaluation coefficient corresponding to a candidate polygon according to an embodiment of this application. Assuming that a candidate polygon q in a third set of candidate polygons is a quadrilateral ABCD shown in FIG. 10, a vertex set corresponding to the quadrilateral ABCD may include a model vertex A, a model vertex B, a model vertex C, and a model vertex D. Four triangles may be formed by the four model vertexes in the vertex set, which are respectively denoted as a triangle ABC (such as the foregoing triangle t1), a triangle ACD (such as the foregoing triangle t2), a triangle ABD (such as the foregoing triangle t3), and a triangle BCD (such as the foregoing triangle t4). A second shape evaluation coefficient corresponding to the quadrilateral ABCD may be shown in the following Equation (5):

$$\beta(ABCD) = \frac{\alpha(ABD) * \alpha(BCD)}{\alpha(ABC) * \alpha(ACD)} \quad (5)$$

where $\beta(ABCD)$ in Equation (5) represents the second shape evaluation coefficient corresponding to the quadrilateral ABCD, $\alpha(ABD)$ represents a first shape evaluation coefficient corresponding to the triangle ABD, $\alpha(BCD)$ represents a first shape evaluation coefficient corresponding to the triangle BCD, $\alpha(ABC)$ represents a first shape evaluation coefficient corresponding to the triangle ABC, and $\alpha(ACD)$ represents a first shape evaluation coefficient corresponding to the triangle ACD, where $\alpha(ABC) \geq \alpha(ACD) \geq \alpha(ABD) \geq \alpha(BCD)$.

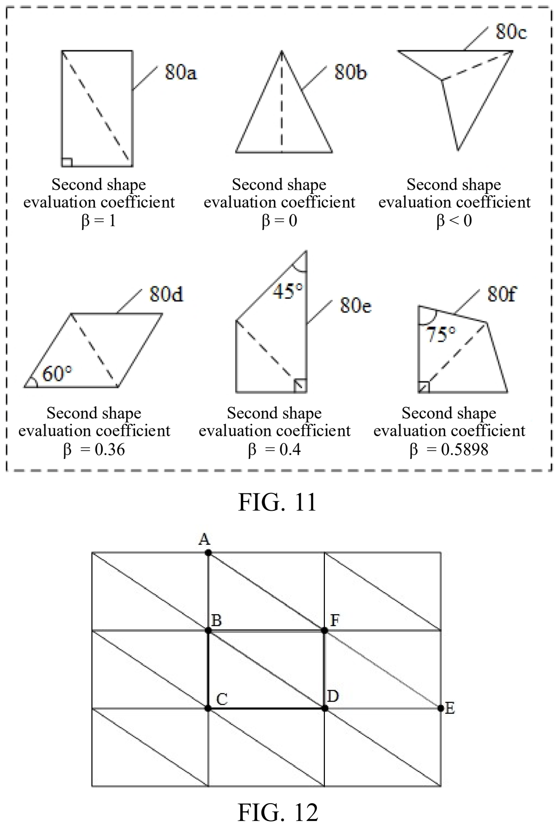

FIG. 11 is a schematic diagram of a second shape evaluation coefficient corresponding to a different candidate polygon according to an embodiment of this application. If a candidate polygon q in a third set of candidate polygons is shown as a figure 80a in FIG. 11, a second shape evaluation coefficient $\beta$ corresponding to the candidate polygon q is equal to 1, i.e., the candidate polygon q in this case is a rectangle. If the candidate polygon q is shown as a figure 80b in FIG. 11, the second shape evaluation coefficient $\beta$ corresponding to the candidate polygon q is equal to 0, i.e., the candidate polygon q is not a quadrilateral. If the candidate polygon q is shown as a figure 80c in FIG. 11, the second shape evaluation coefficient $\beta$ corresponding to the candidate polygon q is less than 0, i.e., the candidate polygon q is approximately a triangular pyramid. If the candidate polygon q is shown as a figure 80d in FIG. 11, the second shape evaluation coefficient $\beta$ corresponding to the candidate polygon q is equal to 0.36. In this case, the candidate polygon q is a rhombus. If the candidate polygon q is shown as a figure 80e in FIG. 11, the second shape evaluation coefficient $\beta$ corresponding to the candidate polygon q is equal to 0.4. In this case, the candidate polygon q is a quadrilateral having two right angles and one 45° angle. If the candidate polygon q is shown as a figure 80f in FIG. 11, the second shape evaluation coefficient $\beta$ corresponding to the candidate polygon q is equal to 0.5898. In this case, the candidate polygon q is a quadrilateral having one right angle and one 75° angle. Different types of polygons shown in FIG. 11 are merely examples of the types of the candidate polygons. In the embodiments of this application, the second shape evaluation coefficient corresponding to each candidate polygon in the third set of candidate polygons may be calculated through the foregoing Equation (4) and Equation (5).

In this way, in the foregoing manner, for the candidate polygon q that is a quadrilateral, the second shape evaluation coefficient corresponding to the candidate polygon q is calculated based on first shape evaluation coefficients respectively corresponding to four triangles formed by four model vertexes in a vertex set corresponding to the candidate polygon, so as to ensure that the calculated second shape evaluation coefficient has relatively high accuracy, and relatively accurately reflect a matching degree between the candidate polygon q and a rectangle, thereby helping determine a polygon of a second shape accordingly. In some embodiments, the method may further include operation S203: Obtain a dihedral angle between two polygons of a first shape in each candidate polygon, and form a first set of candidate polygons with candidate polygons each having the dihedral angle greater than an angle threshold.

Specifically, a dihedral angle between two polygons of a first shape included in each candidate polygon in the third set of candidate polygons may be obtained. The two polygons of a first shape herein may refer to two adjoining polygons (such as two adjoining triangles) of a first shape that form a candidate polygon in a 3D mesh model. The dihedral angle may refer to an included angle between planes where two polygons of a first shape merged into a candidate polygon are located. If the dihedral angle between two polygons of a first shape included in the candidate polygon q in the third set of candidate polygons is greater than the angle threshold, the candidate polygon q may be added to the first set of candidate polygons. In other words, the first set of candidate polygons is a subset of the third set of candidate polygons.

The foregoing angle threshold may be set based on an actual requirement of an application scenario. For example, the angle threshold may be set to 135°. When a dihedral angle between two adjoining polygons of a first shape is greater than an angle threshold (such as 135°), it may be considered that the two adjoining polygons of a first shape are approximately on the same plane. When the dihedral angle between two adjoining polygons of a first shape is less than or equal to the angle threshold (such as 135°), it may be considered that the two adjoining polygons of a first shape are not on the same plane, and a candidate polygon formed by combining the two polygons of a first shape is not a quadrilateral, but approximates a triangular pyramid. In other words, the first set of candidate polygons refers to a set obtained by filtering out the candidate polygon approximating the triangular pyramid from the third set of candidate polygons.

In some embodiments, the method may further include operation S204: Form, through candidate polygons having an overlapping region with a candidate polygon q in the set of first candidate polygons, a set of second candidate polygons corresponding to the candidate polygon q, the set of second candidate polygons being a subset of the set of first candidate polygons.

Specifically, for each candidate polygon in the first set of candidate polygons, another candidate polygon having an overlapping region with the candidate polygon in the first set of candidate polygons is determined, and then a second set of candidate polygons corresponding to the candidate polygon is formed through another candidate polygon, i.e., one candidate polygon corresponds to one second set of candidate polygons. For example, for any candidate polygon (for example, the candidate polygon q) in the first set of candidate polygons, all candidate polygons having an overlapping region with the candidate polygon q may be obtained from the first set of candidate polygons, and a second set of candidate polygons corresponding to the candidate polygon q is formed with all of the candidate polygons having an overlapping region. In other words, each candidate polygon in the first set of candidate polygons may correspond to one second set of candidate polygons, and all second sets of candidate polygons are subsets of the first set of candidate polygons.

A polygon of a first shape (for example, a polygon j of a first shape) in the 3D mesh model may have a plurality of adjoining polygons of a first shape. Then, the polygon j of a first shape may be combined with all polygons of a first shape adjoining the polygon j of a first shape to form a plurality of candidate polygons. In this case, an overlapping region inevitably exists between the plurality of candidate polygons formed by the polygon j of a first shape and the polygons of a first shape adjoining the polygon j of a first shape. The overlapping region is the polygon j of a first shape. In other words, each polygon of a first shape in the 3D mesh model may be combined into one or more candidate polygons.

In some embodiments, the method may further include operation S205: Determine the candidate polygon q as the polygon of the second shape formed by merging the pair of polygons of the first shape, in response to that a second shape evaluation coefficient corresponding to the candidate polygon q is greater than a coefficient threshold, and the second shape evaluation coefficient corresponding to the candidate polygon q is greater than a second shape evaluation coefficient corresponding to each candidate polygon included in the second set of candidate polygons corresponding to the candidate polygon q, to obtain a candidate mesh model.

Specifically, if a second shape evaluation coefficient $\beta$ corresponding to any candidate polygon (for example, a candidate polygon q) in the first set of candidate polygons is greater than the coefficient threshold, and the second shape evaluation coefficient corresponding to the candidate polygon q is greater than the second shape evaluation coefficient corresponding to each candidate polygon included in a second set of candidate polygons corresponding to the candidate polygon q, the candidate polygon q may be used as a polygon of a second shape that is successfully merged in the 3D mesh model, and then a shared edge between two polygons of a first shape forming the polygon of a second shape may be removed. The candidate mesh model may be obtained by performing the same operation as the foregoing candidate polygon q for each candidate polygon in the first set of candidate polygons. The foregoing coefficient threshold may be set based on the actual requirement of the application scenario. For example, the coefficient threshold may be set to 0.37.

In some embodiments, if the second shape evaluation coefficient $\beta$ corresponding to the candidate polygon q is less than or equal to the coefficient threshold, or the second shape evaluation coefficient corresponding to the candidate polygon q is less than or equal to a second shape evaluation coefficient corresponding to at least one candidate polygon in the second set of candidate polygons corresponding to the candidate polygon q, it may be determined that two adjoining polygons of a first shape combined into the candidate polygon q cannot be merged.

In the embodiments of this application, through traversal of the second shape evaluation coefficient $\beta$ of a candidate polygon formed by each group of adjoining polygons of a first shape in the 3D mesh model, if the second shape evaluation coefficient $\beta$ of the candidate polygon meets all the following three conditions. ① The second shape evaluation coefficient $\beta$ is greater than a coefficient threshold (such as 0.37). ② The dihedral angle between two adjoining polygons of a first shape forming the candidate polygon is greater than an angle threshold (such as 135°). ③ If the second shape evaluation coefficient $\beta$ corresponding to a current candidate polygon is greater than a second shape evaluation coefficient $\beta$ of each candidate polygon in a second set of candidate polygons corresponding to the current candidate polygon, the current candidate polygon may be used as a polygon of a second shape that is finally merged, and a diagonal line of the polygon of a second shape is removed from the 3D mesh model. To be specific, a shared edge between two polygons of a first shape that have been successfully merged into the polygon of a second shape is removed, and sides of the polygon of a second shape are retained, so as to finally obtain the candidate mesh model, shown as the candidate mesh model 20b in the foregoing embodiment corresponding to FIG. 2, or shown as the mesh model 30a in the foregoing embodiment corresponding to FIG. 4.

FIG. 12 is a schematic diagram of merging a pair of polygons of a first shape in a 3D mesh model according to an embodiment of this application. Assuming that the candidate polygon q in the first set of candidate polygons is shown as a quadrilateral BCDF in FIG. 12, the quadrilateral BCDF may be formed by a triangle BCD and a triangle BDF in a 3D mesh model. The triangle BCD and the triangle BDF are adjoining polygons of a first shape in the 3D mesh model. A second set of candidate polygons corresponding to the quadrilateral BCDF may include the quadrilateral BDEF and the quadrilateral ABDF. In other words, a candidate polygon having an overlapping region with the quadrilateral BCDF may include the quadrilateral BDEF and the quadrilateral ABDF. When the quadrilateral BCDF is obtained through merging, merging of the quadrilateral BDEF and the quadrilateral ABDF may be affected. When a second shape evaluation coefficient $\beta$ of the quadrilateral BCDF is greater than a coefficient threshold, a dihedral angle between the triangle BCD and the triangle BDF is greater than an angle threshold, and the second shape evaluation coefficient $\beta$ of the quadrilateral BCDF is greater than the second shape evaluation coefficients $\beta$ of each quadrilateral having an overlapping region with the quadrilateral BCDF (i.e., the second shape evaluation coefficient $\beta$ of the quadrilateral BCDF is greater than the second shape evaluation coefficients $\beta$ of each of the quadrilateral BDEF and the quadrilateral ABDF), the quadrilateral BCDF may be determined as the polygon of a second shape, and a diagonal line BD in the 3D mesh model is removed. In this way, each candidate polygon in the 3D mesh model is processed to obtain a candidate mesh model.

In this way, in the foregoing manner, for each candidate polygon formed by each group of adjoining polygons of a first shape in the 3D mesh model, it is determined, based on a relationship between the second shape evaluation coefficient corresponding to the candidate polygon and the coefficient threshold, an included angle between two polygons of a first shape in the candidate polygon, and a relationship between the second shape evaluation coefficient corresponding to the candidate polygon and the second shape evaluation coefficient corresponding to each of all other candidate polygons having an overlapping region with the candidate polygon, whether the candidate polygon may be used as the polygon of a second shape obtained through merging, thereby ensuring that each polygon of a second shape in the obtained candidate mesh model has relatively high quality, i.e., reasonable merging of original polygons of a first shape in the 3D mesh model is implemented, which helps improve a smoothing processing effect of a skin weight.

In some embodiments, the method may further include operation S206: Convert each edge in the candidate mesh model into two half edges having opposite directions, to generate a half-edge data structure corresponding to the candidate mesh model, determine a starting half edge from boundary half edges of the half-edge data structure, and obtain a first set of adjoining half edges of the starting half edge in the half-edge data structure based on a direction of the starting half edge.

Specifically, after the candidate mesh model corresponding to the virtual object is obtained, each edge in the candidate mesh model may be converted into two half edges having opposite directions, to generate a half-edge data structure corresponding to the candidate mesh model. The process of generating the half-edge data structure may be as described in the foregoing embodiment corresponding to the FIG. 5, and details are not described herein again.

Further, a starting half edge may be determined in the half-edge data structure. The starting half edge may be considered as a starting point for searching for a collinear vertex path in the 3D mesh model, and the starting half edge may be a boundary outgoing half edge in the half-edge data structure. Further, a first set of adjoining half edges of the starting half edge in the half-edge data structure may be obtained based on a direction of the starting half edge. As shown in FIG. 5, assuming that the half edge 40c in the half-edge data structure 40b is a starting half edge, a first set of adjoining half edges corresponding to the starting half edge may include a half edge pointing from a model vertex D to a model vertex C.

In some embodiments, the method may further include operation S207: Determine, in response to that a first adjoining half edge collinear with the starting half edge exists in the first set of adjoining half edges, the starting half edge and the first adjoining half edge as an initial collinear path, and obtain a second set of adjoining half edges of the first adjoining half edge in the half-edge data structure based on a direction of the first adjoining half edge.

Specifically, a half edge having a minimum included angle with the starting half edge in the first set of adjoining half edges may be determined as a first adjoining half edge, i.e., a next half edge of the starting half edge having a minimum included angle in the same direction is determined from the first set of adjoining half edges. If a cosine of an included angle between the starting half edge and the first adjoining half edge is greater than a cosine threshold (which may be set based on an actual requirement of an application scenario, for example, the cosine threshold may be set to 0.95), it may be determined that the starting half edge and the first adjoining half edge are collinear. If the cosine of the included angle between the starting half edge and the first adjoining half edge is less than or equal to the cosine threshold, it is determined that the starting half edge and the first adjoining half edge are non-collinear. In this way, it is determined, based on the cosine of the included angle between the starting half edge and the first adjoining half edge, whether the starting half edge and the first adjoining half edge are collinear, which helps improve accuracy and reliability of the found collinear path, i.e., ensures that half edges included in the found collinear path meet a collinear relationship.

When it is detected that a certain first adjoining half edge in the first set of adjoining half edges and the starting half edge are collinear, the starting half edge and the first adjoining half edge may be determined as an initial collinear path, and then a second set of adjoining half edges corresponding to the first adjoining half edge may be obtained from the half-edge data structure based on the direction of the first adjoining half edge. The second set of adjoining half edges may be a set of next half edges in the same direction of the first adjoining half edge in the half-edge data structure.

In some embodiments, the method may further include operation S208: Determine the initial collinear path as a candidate collinear path in the half-edge data structure, in response to that a second adjoining half edge collinear with the first adjoining half edge does not exist in the second set of adjoining half edges, or a second adjoining half edge collinear with the first adjoining half edge in the second set of adjoining half edges is the starting half edge.

Specifically, a next half edge of the first adjoining half edge having the minimum included angle in the same direction may be determined from the second set of adjoining half edges, and a half edge having the minimum included angle with the first adjoining half edge in the second set of adjoining half edges is determined as the second adjoining half edge. If a cosine of an included angle between the first adjoining half edge and the second adjoining half edge is greater than the cosine threshold, it may be determined that the second adjoining half edge and the first adjoining half edge are collinear. Further, the second adjoining half edge may be added to the initial collinear path, and then traversal may be continued to search for (or access) whether a next half edge of the second adjoining half edge having the minimum included angle in the same direction is collinear with the second adjoining half edge, to continue to expand the initial collinear path.

If a cosine of an included angle between the first adjoining half edge and each second adjoining half edge in the second set of adjoining half edges is less than or equal to the cosine threshold, or the second adjoining half edge and the starting half edge are the same half edge, the searching for the initial collinear path may be stopped, and the found initial collinear path at this time is determined as a candidate collinear path on which a searching operation has been completed. In this case, a search process for a collinear path may be completed. Further, a new starting half edge may be determined from the half-edge data structure, and the foregoing operation is repeatedly performed until all candidate collinear paths in the half-edge data structure are found.

In some embodiments, the method may further include operation S209: Assign a traversal identifier to each of half edges included in the candidate collinear path, until each half edge included in the half-edge data structure is assigned with the traversal identifier, to obtain a plurality of candidate collinear paths in the half-edge data structure.

Specifically, after the candidate collinear path is found from the half-edge data structure, a traversal identifier may be assigned to all half edges included in the candidate collinear path, where the traversal identifier indicates that a half edge associated with the traversal identifier has been traversed. In this way, the half edges in the half-edge data structure may be prevented from being traversed twice, thereby increasing a traversal rate of the half edges in the half-edge data structure. When all of the half edges in the half-edge data structure are assigned with the traversal identifier, a collinear path search operation on the half-edge data structure may be stopped, i.e., the collinear path search operation on the half-edge data structure has been completed. A plurality of candidate collinear paths in the half-edge data structure may be obtained through the foregoing operation. Since all half edges in the half-edge data structure are edges with directions, the candidate mesh model is converted into the half-edge data structure, and a query for an adjoining edge may be quickly implemented based on the half-edge data structure. In other words, searching for a collinear path in the 3D mesh model based on the half-edge data structure may improve search efficiency of the collinear path.

In some embodiments, the method may further include operation S210: Merge, in response to that a candidate collinear path L1 and a candidate collinear path L2 that are collinear with the starting half edge exist in the plurality of candidate collinear paths, the candidate collinear path L1 and the candidate collinear path L2 into a collinear vertex path.

Specifically, after the plurality of candidate collinear paths are obtained through searching based on the half-edge data structure, the plurality of candidate collinear paths may be merged. For example, if the candidate collinear path L1 and the candidate collinear path L2 in the plurality of candidate collinear paths have the same starting half edge, the candidate collinear path L1 and the candidate collinear path L2 may be merged into a collinear vertex path, thereby obtaining a collinear vertex path in the 3D mesh model.

In one or more embodiments, the collinear vertex path found from the 3D mesh model may be applied to a scenario of smoothing a skin weight, or may be applied to a scenario of extracting a main structure of a 3D model, or may be applied to a scenario of extracting a main axis of the 3D model and simplifying a structure of the 3D model. A specific application scenario of the collinear vertex path is not limited in this application. For ease of understanding, in the embodiments of this application, an example in which a collinear vertex path is applied to a scenario of smoothing a skin weight is used for description.

In some embodiments, the method may further include operation S211: Perform smoothing processing on an initial skin weight corresponding to a model vertex included in the collinear vertex path based on a path direction of the collinear vertex path in the half-edge data structure, to obtain an updated skin weight corresponding to the model vertex.

In some embodiments, the method may further include operation S212: Perform skinning processing on the virtual object based on the updated skin weight corresponding to the model vertex in the 3D mesh model.

For a specific implementation process of operation S211 and operation S212, reference may be made to the related descriptions of operation S104 and operation S105 in the foregoing embodiment corresponding to FIG. 3. Details are not described herein again.

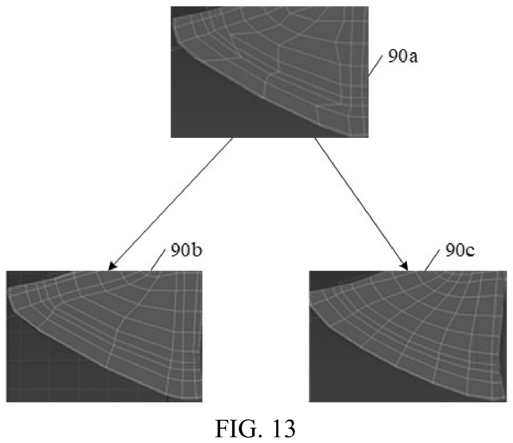

If the obtained 3D mesh model includes a polygon mesh of a first shape, adjoining polygons (such as triangles) of a first shape in the 3D mesh model may be merged, and a shared edge between merged pairs of polygons of a first shape is removed, to obtain a candidate mesh model formed by a polygon (such as a quadrilateral) of a second shape. The process of converting the 3D mesh model into the candidate mesh model may be considered as a pruning operation, which may prevent an unnecessary oblique edge (for example, a diagonal line of a merged polygon of a second shape) from being found during the searching for the collinear vertex path, and helps improve search efficiency of the collinear vertex path. The polygon of a second shape included in the candidate mesh model is searched for a collinear vertex path based on the half-edge data structure corresponding to the candidate mesh model. Smoothness of a skin weight may be improved by performing smoothing processing on an initial skin weight of a model vertex included in the collinear vertex path. Specifically, after longitude and latitude wirings (a longitudinal wiring and a transverse wiring) in the candidate mesh model are found, since weight smoothing results in a horizontal axis direction are mutually restricted, an effect after skinning processing is better, and the wirings are almost completely straight. For the skinning effect, reference may be made to FIG. 13. FIG. 13 is a schematic diagram of an effect of skinning processing based on an updated skin weight according to an embodiment of this application. A 3D model 90a shown in FIG. 13 is a display effect obtained by performing skinning processing on a virtual object through an initial skin weight.

The computer device obtains the original 3D mesh model and does not perform merging processing on adjoining polygons of a first shape in the 3D mesh model, but directly searches the original 3D mesh model for a collinear vertex path, then performs smoothing processing on the initial skin weight corresponding to a model vertex included in the collinear vertex path, and performs skinning processing on the virtual object based on the smoothed skin weight. The obtained effect is shown as a 3D model 90b in FIG. 13.

The computer device obtains the original 3D mesh model, and first performs merging processing on adjoining polygons of a first shape in the 3D mesh model, to obtain a candidate mesh model; and further searches the candidate mesh model for the collinear vertex path based on the half-edge data structure corresponding to the candidate mesh model, performs smoothing processing on the initial skin weight corresponding to the model vertex included in the collinear vertex path to obtain an updated skin weight corresponding to the model vertex, and performs skinning processing on the virtual object based on the updated skin weight. The obtained effect is shown as a 3D model 90c in FIG. 13.

Through comparison of the 3D model 90b and the 3D model 90c shown in FIG. 13, necessity of performing merging processing on adjoining polygons of a first shape in the 3D mesh model may be perceived visually. The effect of skinning processing may be improved by merging adjoining polygons of a first shape in the 3D mesh model.

If merging processing is not performed on the adjoining polygons of a first shape in the 3D mesh model, and the 3D mesh model is directly searched for a collinear vertex path, a determining condition "cosine threshold" of the collinear vertex (which may essentially be a collinear half edge) is more stringent. Due to variable positions in a 3D space, two vectors (for example, two half edges in the half-edge data structure) having a smaller included angle are not necessarily more collinear. In this case, a limitation on the included angle between the collinear half edges needs to be increased, such as 0.99 or 0.98. Otherwise, an undesirable curve is easily searched, which may result in only a very short collinear vertex path being found. However, after the operation of performing merging processing on the adjoining polygons of a first shape is introduced into the 3D mesh model, a candidate mesh model with a relatively regular mesh may be obtained. Correspondingly, the determining condition "cosine threshold" may be appropriately relaxed, and a good skinning processing effect can also be obtained based on appropriate relaxation of the determining condition "cosine threshold" (for example, the cosine threshold may be set to 0.95). In other words, robustness of a search manner of the collinear vertex path may be improved by performing merging processing on the adjoining polygons of a first shape in the 3D mesh model.

In some embodiments, in the embodiments of this application, verification is performed on 26 test samples in a game production scenario. First, skinning processing is performed on the 26 test samples through a current automatic skinning tool (an initial skin weight may be obtained), and then the initial skin weight is repaired through the solution provided in the embodiments of this application, so that abnormal samples with an unsmooth initial skin weight may be reduced from 19 to 3, and a repairing proportion may reach 84.21%, thereby improving final skin smoothness, reducing a problem of interpolation and unsmoothness of a 3D model during movement, and further improving a rendering and display effect of a virtual object.

The skin weight smoothing processing solution provided in the embodiments of this application may be applied to fields such as game production and 3D modeling. For example, the skin weight smoothing processing solution may be specifically applied to a scenario of producing a virtual object (various types of game roles such as a player character, a non-player character, and a prop) in a game, or may be applied to a scenario of producing a virtual live streamer in live streaming, and may further be applied to a modeling scenario of any object, which is not limited in this application.

In one or more embodiments, a 3D mesh model may be created for a virtual object (or a virtual live streamer in live streaming, a real object, or the like) in a game in 3D model production software, an appropriate object skeleton is selected for the 3D mesh model, and the object skeleton is added to the 3D mesh model by adjusting a size and a form of the object skeleton. To enable the object skeleton to drive the 3D mesh model to generate reasonable movement, a skin weight (which is used for representing a weight of influence of a bone joint included in the object skeleton on a model vertex in the 3D mesh model) may be assigned to a model vertex in the 3D mesh model, and skinning processing is performed based on the skin weight corresponding to each model vertex in the 3D mesh model, so that the 3D mesh model of the virtual object may generate movement, so as to implement different forms of the virtual object. If the skin weight assigned to the model vertex in the 3D mesh model has a problem of unsmoothness such as jump, the virtual object may cause problems such as deformation and tortuous wiring during movement. However, through the skin weight smoothing processing solution provided in the embodiments of this application, smoothing processing may be performed on the skin weight of the model vertex, to automatically repair the skin weight having a problem of unsmoothness.

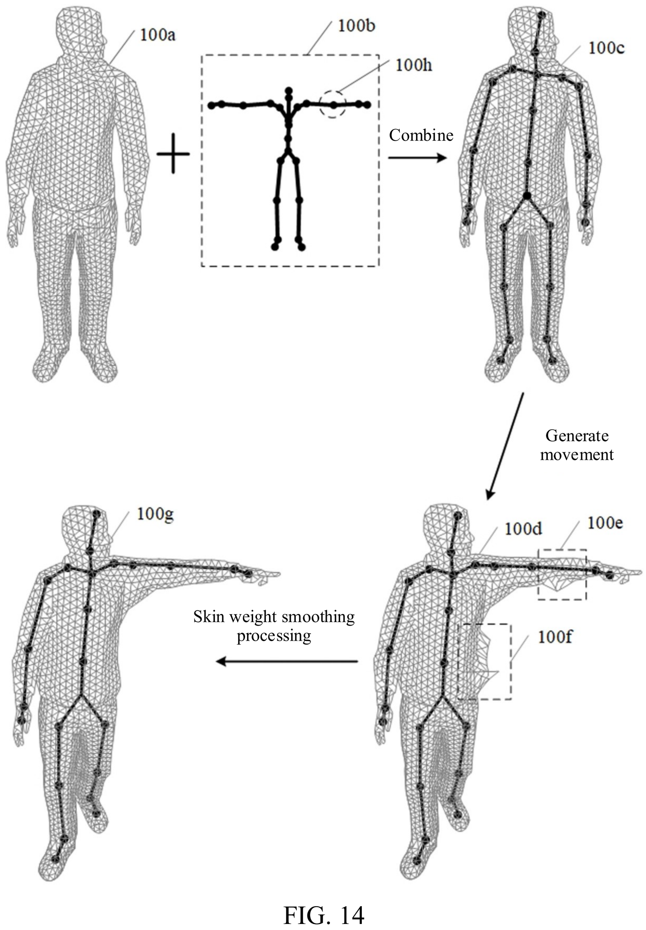

FIG. 14 is a schematic diagram of a scenario of repairing a skin weight of a 3D mesh model according to an embodiment of this application. As shown in FIG. 14, a 3D mesh model 100a may be created in 3D model production software, and an object skeleton 100b is selected for the 3D mesh model 100a. The 3D mesh model 100a and the object skeleton 100b are combined to obtain a 3D model 100c. During the combination of the 3D mesh model 100a and the object skeleton 100b, a position of a bone joint (for example, a dot in a region 100h shown in FIG. 14) in the object skeleton 100b may be adjusted to change a form and a size of the object skeleton 100b, so that the object skeleton 100b may be attached to the 3D mesh model 100a. The 3D mesh model to which the adjusted object skeleton 100b is added is shown as the 3D model 100c in FIG. 14.

To enable the object skeleton 100b to drive the 3D model 100c to generate reasonable movement, a skin weight (the skin weight herein may be referred to as an initial skin weight) may be assigned to a model vertex in the 3D model 100c, and skinning processing is performed based on an initial skin weight corresponding to each model vertex in the 3D model 100c, so as to generate a motion animation (which may include different forms of the 3D model 100c) of the 3D model 100c. Assuming that the motion animation of the 3D model 100c includes a form shown by a 3D model 100d (i.e., a left arm is raised during walking), and when the 3D model 100d presents a current form, problems such as tortuous wiring and deformation occur, as shown by a region 100e and a region 100f in the 3D model 100d, it may be determined that the initial skin weight corresponding to the 3D model 100c may have a problem of unsmoothness, resulting in a poor display effect after final rendering.

In this case, merging processing may be performed on adjoining triangles (a pair of polygons of a first shape) in the region 100e and the region 100f through the skin weight smoothing processing solution provided in the embodiments of this application, to obtain a quadrilateral (a polygon of a second shape), and a diagonal line of the quadrilateral is removed to obtain two new 3D mesh regions (i.e., a mesh region after the merging processing is performed on the triangles in the region 100e, and a mesh region after the merging processing on the triangles in the region 100f). Further, the two new 3D mesh regions may be searched for a collinear vertex path, and smoothing processing is performed on an initial skin weight corresponding to a model vertex included in the collinear vertex path, to automatically repair the initial skin weight having the problem of unsmoothness, and obtain a new skin weight (an updated skin weight). Skinning processing is performed based on the new skin weight, to obtain a 3D model 100g. The 3D model 100g resolves the problems of deformation and tortuous wiring presented by the region 100e and the region 100f on the 3D model 100d, thereby improving a skinning processing effect. For a specific implementation process of performing smoothing processing on an initial skin weight of a model vertex included in each of the region 100e and the region 100f, reference may be made to the related description in the foregoing embodiment corresponding to FIG. 8. Details are not described herein again.

In the embodiments of this application, a 3D mesh model corresponding to a virtual object and initial skin weights corresponding to model vertexes in the 3D mesh model are obtained, and a pair of polygons of a first shape in the 3D mesh model are merged into a polygon of a second shape, to obtain a candidate mesh model. The merged polygon of a second shape is searched for a collinear vertex path based on the half-edge data structure corresponding to the candidate mesh model, and smoothing processing is performed on an initial skin weight corresponding to a model vertex in the collinear vertex path based on a direction of the collinear vertex path, to obtain an updated skin weight corresponding to the model vertex, thereby repairing an unsmooth skin weight in the 3D mesh model and improving smoothness of a skin weight of the model vertex. Skinning processing is performed on the virtual object based on the updated skin weight corresponding to the model vertex, so that a skinning processing effect of the virtual object may be improved, and then a rendering and display effect of the virtual object may be improved.

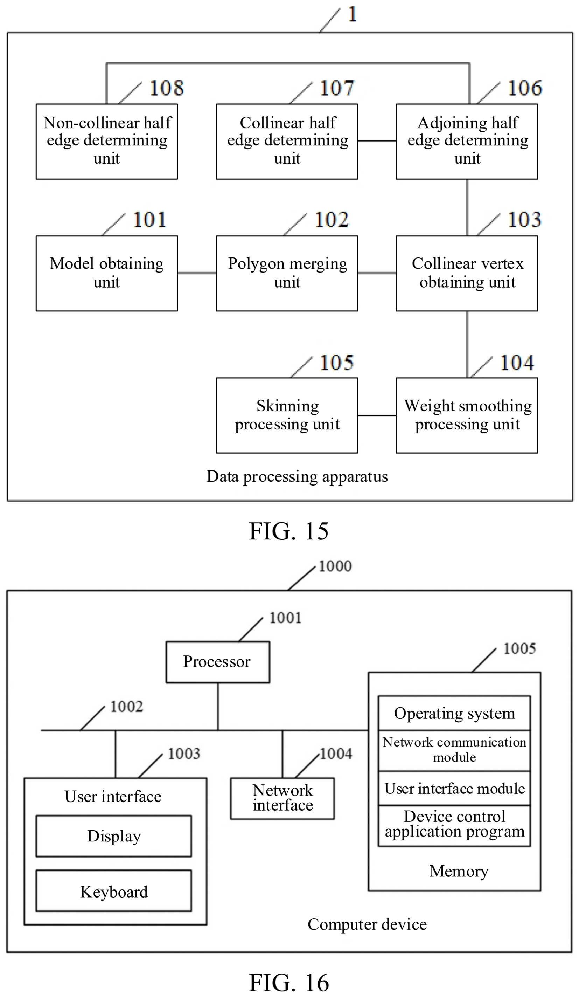

FIG. 15 is a schematic structural diagram of a data processing apparatus according to an embodiment of this application. The data processing apparatus may be applied to the server 10b shown in FIG. 1, or may be applied to the terminal device 10a shown in FIG. 1, which is not limited in this application. As shown in FIG. 15, the data processing apparatus 1 may include a model obtaining unit 101, a polygon merging unit 102, a collinear vertex obtaining unit 103, a weight smoothing processing unit 104, and a skinning processing unit 105.

The model obtaining unit 101 is configured to obtain a 3D mesh model corresponding to a virtual object, and obtain initial skin weights corresponding to model vertexes in the 3D mesh model.

The polygon merging unit 102 is configured to merge a pair of polygons of a first shape in the 3D mesh model into a polygon of a second shape, to obtain a candidate mesh model, where the pair of polygons of the first shape have a shared edge in the 3D mesh model, and the shared edge is removed during the merging.

The collinear vertex obtaining unit 103 is configured to obtain a half-edge data structure corresponding to the candidate mesh model, and traverse half edges in the half-edge data structure, to obtain a collinear vertex path in the 3D mesh model.

The weight smoothing processing unit 104 is configured to perform, based on a path direction of the collinear vertex path in the half-edge data structure, smoothing processing on a first initial skin weight, among the initial skin weights, corresponding to a first model vertex included in the collinear vertex path, to obtain an updated skin weight corresponding to the first model vertex.

The skinning processing unit 105 is configured to perform skinning processing on the virtual object based on the updated skin weight corresponding to the first model vertex in the 3D mesh model.

In one or more embodiments, the polygon merging unit 102 is further configured to:

determine a set of polygons of the first shape in the 3D mesh model, and obtain second shape evaluation coefficients corresponding to candidate polygons each formed by a respective pair of polygons of the first shape in the set of polygons of the first shape, each second shape evaluation coefficient being used for measuring a matching degree between a respective candidate polygon and a rectangle;

obtain a dihedral angle between two polygons of the first shape in each candidate polygon, and form a first set of candidate polygons with candidate polygons each having the dihedral angle greater than an angle threshold;

form, with candidate polygons each having an overlapping region with a candidate polygon q in the first set of candidate polygons, a second set of candidate polygons corresponding to the candidate polygon q, the second set of candidate polygons being a subset of the first set of candidate polygons; and

determine the candidate polygon q as the polygon of the second shape formed by merging the pair of polygons of the first shape, in response to that a second shape evaluation coefficient corresponding to the candidate polygon q is greater than a coefficient threshold, and the second shape evaluation coefficient corresponding to the candidate polygon q is greater than a second shape evaluation coefficient corresponding to each candidate polygon included in the second set of candidate polygons corresponding to the candidate polygon q.

In one or more embodiments, the polygon merging unit 102 is further configured to:

display the 3D mesh model and a model region selection control in a skinning processing page of the virtual object;

determine, in response to a trigger operation through the model region selection control, a model region selected by the trigger operation as a to-be-processed vertex region in the 3D mesh model; and

form the set of polygons of the first shape through polygons of the first shape included in the to-be-processed vertex region.

In one or more embodiments, the polygon merging unit 102 is further configured to:

add, to a third set of candidate polygons, the candidate polygons each formed by the respective pair of polygons of the first shape in the set of polygons of the first shape, the third set of candidate polygons including the first set of candidate polygons;

obtain a vertex set corresponding to the candidate polygon q in the third set of candidate polygons, and obtain a first shape evaluation coefficient corresponding to each of a plurality of polygons of the first shape formed by model vertexes in the vertex set, each first shape evaluation coefficient being used for measuring a matching degree between a respective polygon of the first shape and an equilateral polygon; and

determine the second shape evaluation coefficient corresponding to the candidate polygon q based on the first shape evaluation coefficient corresponding to each of the plurality of polygons of the first shape formed by the model vertexes in the vertex set.

In one or more embodiments, the polygon merging unit 102 is further configured to:

obtain a polygon j of the first shape from the plurality of polygons of the first shape formed by the model vertexes included in the vertex set;

obtain a polygon area corresponding to the polygon j of the first shape, and obtain a sum of squares of side lengths corresponding to the polygon j of the first shape; and

determine a first shape evaluation coefficient corresponding to the polygon j of the first shape based on a ratio of the polygon area to the sum of squares of side lengths.

In one or more embodiments, the candidate polygon q is a quadrilateral, and a plurality of polygons of the first shape formed by model vertexes in a vertex set include a triangle t1, a triangle t2, a triangle t3, and a triangle t4.
The polygon merging unit 102 is further configured to:

obtain a first coefficient product of a first shape evaluation coefficient corresponding to the triangle t1 and a first shape evaluation coefficient corresponding to the triangle t2, and obtain a second coefficient product of a first shape evaluation coefficient corresponding to the triangle t3 and a first shape evaluation coefficient corresponding to the triangle t4; and

determine a ratio of the second coefficient product to the first coefficient product as the second shape evaluation coefficient corresponding to the candidate polygon q,

the first shape evaluation coefficient corresponding to each of the triangle t1 and the triangle t2 being greater than or equal to the first shape evaluation coefficient corresponding to each of the triangle t3 and the triangle t4.

In one or more embodiments, the collinear vertex obtaining unit 103 is further configured to:

convert each edge in the candidate mesh model into two half edges having opposite directions, to generate the half-edge data structure corresponding to the candidate mesh model;

determine a starting half edge from boundary half edges of the half-edge data structure, and obtain a first set of adjoining half edges of the starting half edge in the half-edge data structure based on a direction of the starting half edge;

determine, in response to that a first adjoining half edge collinear with the starting half edge exists in the first set of adjoining half edges, the starting half edge and the first adjoining half edge as an initial collinear path, and obtain a second set of adjoining half edges of the first adjoining half edge in the half-edge data structure based on a direction of the first adjoining half edge;

determine the initial collinear path as a candidate collinear path in the half-edge data structure, in response to that a second adjoining half edge collinear with the first adjoining half edge does not exist in the second set of adjoining half edges, or the second adjoining half edge collinear with the first adjoining half edge in the second set of adjoining half edges is the starting half edge;

assign a traversal identifier to each of half edges included in the candidate collinear path, until each half edge included in the half-edge data structure is assigned with the traversal identifier, to obtain a plurality of candidate collinear paths in the half-edge data structure; and

merge, in response to that a candidate collinear path L1 and a candidate collinear path L2 that are collinear with the starting half edge exist in the plurality of candidate collinear paths, the candidate collinear path L1 and the candidate collinear path L2 into a collinear vertex path.

In one or more embodiments, the data processing apparatus 1 further includes an adjoining half edge determining unit 106, a collinear half edge determining unit 107, and a non-collinear half edge determining unit 108.
The adjoining half edge determining unit 106 is configured to determine a half edge having a minimum included angle with the starting half edge in the first set of adjoining half edges as the first adjoining half edge.
The collinear half edge determining unit 107 is configured to determine that the starting half edge and the first adjoining half edge are collinear each other, in response to that a cosine of an included angle between the starting half edge and the first adjoining half edge is greater than a cosine threshold.
The non-collinear half edge determining unit 108 is configured to determine that the starting half edge and the first adjoining half edge are non-collinear with each other, in response to that the cosine of the included angle between the starting half edge and the first adjoining half edge is less than or equal to the cosine threshold.
In one or more embodiments, the weight smoothing processing unit 104 is further configured to:

obtain a smoothing window corresponding to the 3D mesh model;

slide the smoothing window on the collinear vertex path based on a path direction of the collinear vertex path in the half-edge data structure, to obtain a weighted average of initial skin weights corresponding to model vertexes covered by the smoothing window; and

determine the weighted average as an updated skin weight corresponding to a central vertex covered by the smoothing window.

In one or more embodiments, the weight smoothing processing unit 104 is further configured to:

obtain a smoothing filter corresponding to the 3D mesh model, and obtain a neighborhood corresponding to each model vertex included in the collinear vertex path, a quantity of vertexes in the neighborhood being associated with a size of the smoothing filter;

perform, based on the path direction of the collinear vertex path in the half-edge data structure, filtering processing on an initial skin weight corresponding to a model vertex p in the collinear vertex path, and an initial skin weight corresponding to a model vertex in a neighborhood corresponding to the model vertex p through the smoothing filter, to obtain a weighted average weight; and

determine the weighted average weight as the updated skin weight corresponding to the model vertex p.

In one or more embodiments, the performing, by the skinning processing unit 105, skinning processing on the virtual object based on the updated skin weight corresponding to the first model vertex in the 3D mesh model includes:

obtaining an object skeleton corresponding to the virtual object, and obtaining a bone transformation parameter corresponding to a bone joint included in the object skeleton;

determining an updated vertex position corresponding to the first model vertex in the 3D mesh model based on an initial vertex position corresponding to the first model vertex in the 3D mesh model, the updated skin weight, and the bone transformation parameter; and

binding the object skeleton to the 3D mesh model based on the updated vertex position corresponding to the first model vertex in the 3D mesh model, to obtain a skinning result corresponding to the virtual object.

According to an embodiment of this application, the operations involved in the data processing method shown above may be performed by each module in the data processing apparatus 1 shown in FIG. 15. For example, operation S101 shown in FIG. 3 may be performed by the model obtaining unit 101 shown in FIG. 15, operation S102 shown in FIG. 3 may be performed by the polygon merging unit 102 shown in FIG. 15, operation S103 shown in FIG. 3 may be performed by the collinear vertex obtaining unit 103 shown in FIG. 15, operation S104 shown in FIG. 3 may be performed by the weight smoothing processing unit 104 shown in FIG. 15, and operation S105 shown in FIG. 3 may be performed by the skinning processing unit 105 shown in FIG. 15.

According to an embodiment of this application, the units in the data processing apparatus 1 shown in FIG. 15 may be separately or all combined into one or several units, or one (or more) of the units may be further split into at least two small subunits by function, which can implement the same operations without affecting the implementation of the technical effects of the embodiments of this application. The foregoing units are divided based on logical functions. In practical application, functions of one unit may also be implemented by at least two units, or the functions of the at least two units may be implemented by one unit. In another embodiment of this application, the data processing apparatus 1 may also include another unit. In actual application, these functions may also be implemented with assistance of another unit, and may be implemented by at least two units in collaboration.

In the embodiments of this application, a 3D mesh model corresponding to a virtual object and initial skin weights corresponding to model vertexes in the 3D mesh model are obtained, and a pair of polygons of a first shape in the 3D mesh model are merged into a polygon of a second shape, to obtain a candidate mesh model. The merged polygon of a second shape is searched for a collinear vertex path based on the half-edge data structure corresponding to the candidate mesh model, and smoothing processing is performed on a first initial skin weight corresponding to a first model vertex in the collinear vertex path based on a direction of the collinear vertex path, to obtain an updated skin weight corresponding to the first model vertex, thereby repairing an unsmooth skin weight in the 3D mesh model and improving smoothness of a skin weight of the first model vertex. Skinning processing is performed on the virtual object based on the updated skin weight corresponding to the first model vertex, so that a skinning processing effect of the virtual object may be improved, and then a rendering and display effect of the virtual object may be improved.

FIG. 16 is a schematic structural diagram of a computer device according to an embodiment of this application. As shown in FIG. 16, the computer device 1000 may be the server 10b in the embodiment corresponding to FIG. 1, or may be the terminal device 10a in the embodiment corresponding to FIG. 1, which is not limited herein. For ease of understanding, in this embodiment of this application, an example in which the computer device is a terminal device is used. The computer device 1000 may include a processor 1001, a network interface 1004, and a memory 1005. In addition, the computer device 1000 may further include a user interface 1003 and at least one communication bus 1002. The communication bus 1002 is configured to implement connection and communication between these components. The user interface 1003 may include a display and a keyboard. In some embodiments, the user interface 1003 may further include a standard wired interface and a standard wireless interface. In some embodiments, the network interface 1004 may include a standard wired interface and a standard wireless interface (such as a Wi-Fi interface). The memory 1005 may be a high-speed random access memory (RAM) memory, or may be a non-volatile memory, for example, at least one magnetic disk memory. In some embodiments, the memory 1005 may further be at least one storage apparatus away from the foregoing processor 1001. As shown in FIG. 16, the memory 1005, as a computer-readable storage medium, may include an operating system, a network communication module, a user interface module, and a device control application program.

The network interface 1004 in the computer device 1000 shown in FIG. 16 may further provide a network communication function. The user interface 1003 is mainly configured to provide an input interface for a user. The processor 1001 may be configured to invoke the device control application program stored in the memory 1005, to implement the data processing method provided in the embodiments of this application.

The computer device 1000 described in the embodiments of this application may perform the foregoing description of the data processing method in the embodiment corresponding to any one of FIG. 3 and FIG. 8, or may perform the foregoing description of the data processing apparatus 1 in the embodiment corresponding to FIG. 15. Details are not described herein again. In addition, for the description of the beneficial effects of using the same method, details are not described again.

In addition, an embodiment of this application further provides a computer-readable storage medium, the computer-readable storage medium having stored therein a computer program executed by the data processing apparatus 1 described above. The computer program includes a program instruction. When executing the program instruction, a processor can perform the foregoing description of the data processing method in the embodiment corresponding to any one of FIG. 3 and FIG. 8. Therefore, details are not described herein again. In addition, for the description of the beneficial effects of using the same method, details are not described again. The storage medium may be a magnetic disk, an optical disk, a read-only memory (ROM), a RAM, or the like. For technical details that are not disclosed in the embodiment of the computer-readable storage medium involved in this application, reference is made to the description of the method embodiment of this application. In an example, the program instruction may be deployed on a computing device for execution, or executed on a plurality of computing devices at one position, or executed on a plurality of computing devices distributed at a plurality of positions and connected by a communication network. The plurality of computing devices distributed at the plurality of positions and connected by the communication network may form a blockchain system.

In addition, an embodiment of this application further provides a computer program product or a computer program. The computer program product or the computer program may include a computer instruction. The computer instruction may be stored in a computer-readable storage medium. A processor of a computer device reads the computer instruction from the computer-readable storage medium, and the processor may execute the computer instruction to cause the computer device to perform the foregoing description of the data processing method in the embodiment corresponding to any one of FIG. 3 and FIG. 8. Therefore, details are not described herein again. In addition, for the description of the beneficial effects of using the same method, details are not described again. For technical details not disclosed in the embodiment of the computer program product or the computer program involved in this application, reference is made to the description of the method embodiment of this application.

Terms such as "first" and "second" in the specification and claims of the embodiments of this application and the accompanying drawings are configured for distinguishing between different medium contents, rather than being intended to describe a specific order. Moreover, the term "include" and any variation thereof are intended to cover non-exclusive inclusions. For example, processes, methods, apparatuses, products, or devices including a series of operations or units are not limited to the listed operations or modules, but instead, include operations or modules not listed in some embodiments, or include other operations or units inherent in these processes, methods, apparatuses, products, or devices in some embodiments.

A person of ordinary skill in the art may realize that operations of units and algorithms of various examples described with reference to the embodiments disclosed in this specification can be implemented in electronic hardware, computer software, or a combination of the electronic hardware and the computer software. To clearly describe interchangeability of hardware and software, the compositions and operations of the various examples are generally described in terms of functionality in the foregoing description. Whether the functions are executed by hardware or software depends on specific applications and design constraint conditions of the technical solutions. A person skilled in the art may use different methods to implement the described functions for each particular application, but it is not to be considered that the implementation goes beyond the scope of this application.

The method and the related apparatus provided in the embodiments of this application are described with reference to the method flowcharts and/or schematic structural diagrams provided in the embodiments of this application. Specifically, each process and/or block in the method flowcharts and/or schematic structural diagrams and a combination of processes and/or blocks in the flowcharts and/or block diagrams may be implemented through computer program instructions. These computer program instructions may be provided to a processor of a general-purpose computer, a special-purpose computer, an embedded processing machine, or another programmable data processing device to generate a machine, so that instructions executed by the processor of the computer or the another programmable data processing device generate an apparatus for implementing functions specified in one or more processes of the flowcharts and/or one or more blocks of the schematic structural diagrams. These computer program instructions may also be stored in a computer-readable memory that can direct a computer or another programmable data processing device to operate in a specific manner, so that the instructions stored in the computer-readable memory produce a product including an instruction apparatus. The instruction apparatus implements the functions specified in one or more processes of the flowchart and/or one or more blocks of the schematic structural diagram. These computer program instructions may also be loaded onto a computer or another programmable data processing device, so that a series of operations are performed on the computer or the another programmable device to generate a computer-implemented process, and the instructions executed on the computer or the another programmable device provide operations for implementing the functions specified in one or more processes of the flowchart and/or one or more blocks of the schematic structural diagram.

What is disclosed above is merely exemplary embodiments of this application, and certainly is not intended to limit the scope of the claims of this application. Therefore, equivalent variations made in accordance with the claims of this application still fall within the scope of this application.

**Claims**

1. A data processing method, performed by a computer device, the method comprising:

obtaining a three-dimensional, 3D, mesh model corresponding to a virtual object, and obtaining initial skin weights corresponding to model vertexes in the 3D mesh model;
merging a pair of polygons of a first shape in the 3D mesh model into a polygon of a second shape, to obtain a candidate mesh model, wherein the pair of polygons of the first shape have a shared edge in the 3D mesh model, and the shared edge is removed during the merging;
obtaining a half-edge data structure corresponding to the candidate mesh model, and traversing half edges in the half-edge data structure, to obtain a collinear vertex path in the 3D mesh model;
performing, based on a path direction of the collinear vertex path in the half-edge data structure, smoothing processing on a first initial skin weight, among the initial skin weights, corresponding to a first model vertex comprised in the collinear vertex path, to obtain an updated skin weight corresponding to the first model vertex;

and
performing skinning processing on the virtual object based on the updated skin weight corresponding to the first model vertex in the 3D mesh model.

2. The method according to claim 1, wherein the merging a pair of polygons of a first shape in the 3D mesh model into a polygon of a second shape comprises:

determining a set of polygons of the first shape in the 3D mesh model, and obtaining second shape evaluation coefficients corresponding to candidate polygons each formed by a respective pair of polygons of the first shape in the set of polygons of the first shape, each second shape evaluation coefficient being used for measuring a matching degree between a respective candidate polygon and a rectangle;
obtaining a dihedral angle between two polygons of the first shape in each candidate polygon, and forming a first set of candidate polygons with candidate polygons each having the dihedral angle greater than an angle threshold;
forming, with candidate polygons each having an overlapping region with a candidate polygon q in the first set of candidate polygons, a second set of candidate polygons corresponding to the candidate polygon q, the second set of candidate polygons being a subset of the first set of candidate polygons; and
determining the candidate polygon q as the polygon of the second shape formed by merging the pair of polygons of the first shape, in response to that a second shape evaluation coefficient corresponding to the candidate polygon q is greater than a coefficient threshold, and the second shape evaluation coefficient corresponding to the candidate polygon q is greater than a second shape evaluation coefficient corresponding to each candidate polygon comprised in the second set of candidate polygons corresponding to the candidate polygon q.

3. The method according to claim 2, wherein the determining a set of polygons of the first shape in the 3D mesh model comprises:

displaying the 3D mesh model and a model region selection control in a skinning processing page of the virtual object;
determining, in response to a trigger operation through the model region selection control, a model region selected by the trigger operation as a to-be-processed vertex region in the 3D mesh model; and
forming the set of polygons of the first shape through polygons of the first shape comprised in the to-be-processed vertex region.

4. The method according to claim 2 or 3, wherein the obtaining second shape evaluation coefficients corresponding to candidate polygon each formed by a respective pair of polygons of the first shape in the set of polygons of the first shape comprises:

adding, to a third set of candidate polygons, the candidate polygons each formed by the respective pair of polygons of the first shape in the set of polygons of the first shape, the third set of candidate polygons comprising the first set of candidate polygons;
obtaining a vertex set corresponding to the candidate polygon q in the third set of candidate polygons, and obtaining a first shape evaluation coefficient corresponding to each of a plurality of polygons of the first shape formed by model vertexes in the vertex set, each first shape evaluation coefficient being used for measuring a matching degree between a respective polygon of the first shape and an equilateral polygon; and
determining the second shape evaluation coefficient corresponding to the candidate polygon q based on the first shape evaluation coefficient corresponding to each of the plurality of polygons of the first shape formed by the model vertexes in the vertex set.

5. The method according to claim 4, wherein the obtaining a first shape evaluation coefficient corresponding to each of a plurality of polygons of the first shape formed by model vertexes in the vertex set comprises:

obtaining a polygon j of the first shape from the plurality of polygons of the first shape formed by the model vertexes comprised in the vertex set;
obtaining a polygon area corresponding to the polygon j of the first shape, and obtaining a sum of squares of side lengths corresponding to the polygon j of the first shape; and
determining a first shape evaluation coefficient corresponding to the polygon j of the first shape based on a ratio of the polygon area to the sum of squares of side lengths.

6. The method according to claim 4 or 5, wherein the candidate polygon q is a quadrilateral, and the plurality of polygons of the first shape formed by the model vertexes in the vertex set comprise a triangle t1, a triangle t2, a triangle t3, and a triangle t4; and
the determining the second shape evaluation coefficient corresponding to the candidate polygon q based on the first shape evaluation coefficient corresponding to each of the plurality of polygons of the first shape formed by the model vertexes in the vertex set comprises:

obtaining a first coefficient product of a first shape evaluation coefficient corresponding to the triangle t1 and a first shape evaluation coefficient corresponding to the triangle t2, and obtaining a second coefficient product of a first shape evaluation coefficient corresponding to the triangle t3 and a first shape evaluation coefficient corresponding to the triangle t4; and
determining a ratio of the second coefficient product to the first coefficient product as the second shape evaluation coefficient corresponding to the candidate polygon q,
the first shape evaluation coefficient corresponding to each of the triangle t1 and the triangle t2 being greater than or equal to the first shape evaluation coefficient corresponding to each of the triangle t3 and the triangle t4.

7. The method according to any one of claims 1 to 6, wherein the obtaining a half-edge data structure corresponding to the candidate mesh model, and traversing half edges in the half-edge data structure, to obtain a collinear vertex path in the 3D mesh model comprises:

converting each edge in the candidate mesh model into two half edges having opposite directions, to generate the half-edge data structure corresponding to the candidate mesh model;
determining a starting half edge from boundary half edges of the half-edge data structure, and obtaining a first set of adjoining half edges of the starting half edge in the half-edge data structure based on a direction of the starting half edge;
determining, in response to that a first adjoining half edge collinear with the starting half edge exists in the first set of adjoining half edges, the starting half edge and the first adjoining half edge as an initial collinear path, and obtaining a second set of adjoining half edges of the first adjoining half edge in the half-edge data structure based on a direction of the first adjoining half edge;
determining the initial collinear path as a candidate collinear path in the half-edge data structure, in response to that a second adjoining half edge collinear with the first adjoining half edge does not exist in the second set of adjoining half edges, or the second adjoining half edge collinear with the first adjoining half edge in the second set of adjoining half edges is the starting half edge;
assigning a traversal identifier to each of half edges comprised in the candidate collinear path, until each half edge comprised in the half-edge data structure is assigned with the traversal identifier, to obtain a plurality of candidate collinear paths in the half-edge data structure; and
merging, in response to that a candidate collinear path L1 and a candidate collinear path L2 that are collinear with the starting half edge exist in the plurality of candidate collinear paths, the candidate collinear path L1 and the candidate collinear path L2 into a collinear vertex path.

8. The method according to claim 7, further comprising:

determining a half edge having a minimum included angle with the starting half edge in the first set of adjoining half edges as the first adjoining half edge;
determining that the starting half edge and the first adjoining half edge are collinear with each other, in response to that a cosine of an included angle between the starting half edge and the first adjoining half edge is greater than a cosine threshold; and
determining that the starting half edge and the first adjoining half edge are non-collinear with each other, in response to that the cosine of the included angle between the starting half edge and the first adjoining half edge is less than or equal to the cosine threshold.

9. The method according to any one of claims 1 to 8, wherein the performing, based on a path direction of the collinear vertex path in the half-edge data structure, smoothing processing on a first initial skin weight corresponding to a first model vertex comprised in the collinear vertex path, to obtain an updated skin weight corresponding to the first model vertex comprises:

obtaining a smoothing window corresponding to the 3D mesh model;
sliding the smoothing window on the collinear vertex path based on a path direction of the collinear vertex path in the half-edge data structure, to obtain a weighted average of initial skin weights corresponding to model vertexes covered by the smoothing window; and

determining the weighted average as an updated skin weight corresponding to a central vertex covered by the smoothing window.

10. The method according to any one of claims 1 to 8, wherein the performing, based on a path direction of the collinear vertex path in the half-edge data structure, smoothing processing on a first initial skin weight corresponding to a first model vertex comprised in the collinear vertex path, to obtain an updated skin weight corresponding to the first model vertex comprises:

obtaining a smoothing filter corresponding to the 3D mesh model, and obtaining a neighborhood corresponding to each model vertex comprised in the collinear vertex path, a quantity of vertexes in the neighborhood being associated with a size of the smoothing filter;

performing, based on the path direction of the collinear vertex path in the half-edge data structure, filtering processing on an initial skin weight corresponding to a model vertex p in the collinear vertex path, and an initial skin weight corresponding to a model vertex in a neighborhood corresponding to the model vertex p through the smoothing filter, to obtain a weighted average weight; and

determining the weighted average weight as the updated skin weight corresponding to the model vertex p.

11. The method according to any one of claims 1 to 10, wherein the performing skinning processing on the virtual object based on the updated skin weight corresponding to the first model vertex in the 3D mesh model comprises:

obtaining an object skeleton corresponding to the virtual object, and obtaining a bone transformation parameter corresponding to a bone joint comprised in the object skeleton;

determining an updated vertex position corresponding to the first model vertex in the 3D mesh model based on an initial vertex position corresponding to the first model vertex in the 3D mesh model, the updated skin weight, and the bone transformation parameter; and

binding the object skeleton to the 3D mesh model based on the updated vertex position corresponding to the first model vertex in the 3D mesh model, to obtain a skinning result corresponding to the virtual object.

12. A data processing apparatus, comprising:

a model obtaining unit, configured to obtain a 3D mesh model corresponding to a virtual object, and obtain initial skin weights corresponding to model vertexes in the 3D mesh model;

a polygon merging unit, configured to merge a pair of polygons of a first shape in the 3D mesh model into a polygon of a second shape, to obtain a candidate mesh model, wherein the pair of polygons of the first shape have a shared edge in the 3D mesh model, and the shared edge is removed during the merging;

a collinear vertex obtaining unit, configured to obtain a half-edge data structure corresponding to the candidate mesh model, and traverse half edges in the half-edge data structure, to obtain a collinear vertex path in the 3D mesh model;

a weight smoothing processing unit, configured to perform, based on a path direction of the collinear vertex path in the half-edge data structure, smoothing processing on a first initial skin weight, among the initial skin weights, corresponding to a first model vertex comprised in the collinear vertex path, to obtain an updated skin weight corresponding to the first model vertex; and

a skinning processing unit, configured to perform skinning processing on the virtual object based on the updated skin weight corresponding to the first model vertex in the 3D mesh model.

13. A computer device, comprising a memory and a processor,
the memory being connected to the processor, the memory being configured to store a computer program, and the processor being configured to invoke the computer program, to cause the computer device to perform the method according to any one of claims 1 to 11.

14. A computer-readable storage medium, having a computer program stored therein, the computer program being adapted to be loaded and executed by a processor, to cause a computer device having the processor to perform the method according to any one of claims 1 to 11.

15. A computer program product, comprising a computer program or an instruction, the computer program or the instruction, when executed by a processor, implementing the method according to any one of claims 1 to 11.

Skin weight smoothing processing request

Skinning result

## FIG. 1

20a

Merge a pair
of triangles

20b

20d

Search for a
collinear
vertex path

20c

Initial skin
weight

Smooth an initial skin weight
corresponding to a model vertex
in the collinear vertex path

Repaired skin weight

## FIG. 2

Obtain a 3D mesh model corresponding to a virtual object, and obtain initial skin weights corresponding to model vertexes in the 3D mesh model — S101

Merge a pair of polygons of a first shape in the 3D mesh model into a polygon of a second shape, to obtain a candidate mesh model, where two polygons of a first shape included in the pair of polygons of a first shape have a shared edge in the 3D mesh model, and the shared edge is removed during the merging — S102

Obtain a half-edge data structure corresponding to the candidate mesh model, and traverse half edges in the half-edge data structure to obtain a collinear vertex path in the 3D mesh model — S103

Perform smoothing processing on a first initial skin weight corresponding to a first model vertex included in the collinear vertex path based on a path direction of the collinear vertex path in the half-edge data structure, to obtain an updated skin weight corresponding to the model vertex — S104

Perform skinning processing on the virtual object based on the updates skin weight corresponding to the first model vertex in the 3D mesh model — S105

FIG. 3

30a

FIG. 4

FIG. 5

FIG. 6

FIG. 7

Obtain a 3D mesh model corresponding to a virtual object, and obtain initial skin weights corresponding to model vertexes in the 3D mesh model — S201

Determine a set of polygons of a first shape in the 3D mesh model, and obtain second shape evaluation coefficients corresponding to candidate polygons each formed by a respective pair of polygons of the first shape in the set of polygons of the first shape, two polygons of the first shape included in the pair of polygons of the first shape having a shared edge in the 3D mesh model, and each second shape evaluation coefficient being used for measuring a matching degree between a respective candidate polygon and a rectangle — S202

Obtain a dihedral angle between two polygons of a first shape in each candidate polygon, and form a first set of candidate polygons with candidate polygons each having the dihedral angle greater than an angle threshold — S203

Form, with candidate polygons each having an overlapping region with a candidate polygon q in the first set of candidate polygons, a second set of candidate polygons corresponding to the candidate polygon q, the second set of candidate polygons being a subset of the first set of candidate polygons — S204

Determine the candidate polygon q as the polygon of the second shape formed by merging the pair of polygons of the first shape, in response to that a second shape evaluation coefficient corresponding to the candidate polygon q is greater than a coefficient threshold, and the second shape evaluation coefficient corresponding to the candidate polygon q is greater than a second shape evaluation coefficient corresponding to each candidate polygon included in the second set of candidate polygons corresponding to the candidate polygon q, to obtain a candidate mesh model. — S205

Convert each edge in the candidate mesh model into two half edges having opposite directions, to generate a half-edge data structure corresponding to the candidate mesh model, determine a starting half edge from boundary half edges of the half-edge data structure, and obtain a first set of adjoining half edges of the starting half edge in the half-edge data structure based on a direction of the starting half edge — S206

Determine, in response to that a first adjoining half edge collinear with the starting half edge exists in the first set of adjoining half edges, the starting half edge and the first adjoining half edge as an initial collinear path, and obtain a second set of adjoining half edges of the first adjoining half edge in the half-edge data structure based on a direction of the first adjoining half edge. — S207

Determine the initial collinear path as a candidate collinear path in the half-edge data structure, in response to that a second adjoining half edge collinear with the first adjoining half edge does not exist in the second set of adjoining half edges, or a second adjoining half edge collinear with the first adjoining half edge in the second set of adjoining half edges is the starting half edge — S208

Assign a traversal identifier to each of half edges included in the candidate collinear path, until each half edge included in the half-edge data structure is assigned with the traversal identifier, to obtain a plurality of candidate collinear paths in the half-edge data structure — S209

Merge, in response to that a candidate collinear path L1 and a candidate collinear path L2 that are collinear with the starting half edge exist in the plurality of candidate collinear paths, the candidate collinear path L1 and the candidate collinear path L2 into a collinear vertex path — S210

Perform smoothing processing on an initial skin weight corresponding to a model vertex included in the collinear vertex path based on a path direction of the collinear vertex path in the half-edge data structure, to obtain an updated skin weight corresponding to the model vertex — S211

Perform skinning processing on the virtual object based on the updated skin weight corresponding to the model vertex in the 3D mesh model — S212

FIG. 8

FIG. 9

FIG. 10

Second shape evaluation coefficient β = 1

Second shape evaluation coefficient β = 0

Second shape evaluation coefficient β < 0

Second shape evaluation coefficient β = 0.36

Second shape evaluation coefficient β = 0.4

Second shape evaluation coefficient β = 0.5898

FIG. 11

FIG. 12

FIG. 13

FIG. 14

FIG. 15

FIG. 16

## INTERNATIONAL SEARCH REPORT

| International application No. |
| --- |
| **PCT/CN2024/086296** |

| A. | CLASSIFICATION OF SUBJECT MATTER |
| --- | --- |

G06T 19/20(2011.01)i

According to International Patent Classification (IPC) or to both national classification and IPC

| B. | FIELDS SEARCHED |
| --- | --- |

Minimum documentation searched (classification system followed by classification symbols)

IPC: G06T G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 虚拟, 对象, 角色, 蒙皮, 三维网格, 模型, 顶点, 关节, 绑定, 权重, 多边形, 合并, 共享边, 半边, 布线, 路径, 遍历, 共线, 平滑, 更新, virtual, object, character, skin, three-dimensional mesh, model, vertex, joint, binding, weight, polygon, merge, shared edge, half edge, route, path, traversal, collinear, smooth, update

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116402989 A (TENCENT TECHNOLOGY (SHENZHEN) CO., LTD.) 07 July 2023 (2023-07-07)<br>claims 1-14, and description, paragraphs [0030]-[0138] | 1-15 |
| A | CN 112991502 A (TENCENT TECHNOLOGY (SHENZHEN) CO., LTD.) 18 June 2021 (2021-06-18)<br>description, paragraphs [0046]-[0114] | 1-15 |
| A | CN 112802161 A (QINGDAO LIANHE CHUANGZHI TECHNOLOGY CO., LTD.) 14 May 2021 (2021-05-14)<br>entire document | 1-15 |
| A | WO 2022143179 A1 (MOFA (SHANGHAI) INFORMATION TECHNOLOGY CO., LTD. et al.) 07 July 2022 (2022-07-07)<br>entire document | 1-15 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 June 2024** | **20 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/086296**

| Patent document cited in search report | | | Publication date (day/month/year) | Patent family member(s) | | | Publication date (day/month/year) |
|---|---|---|---|---|---|---|---|
| CN | 116402989 | A | 07 July 2023 | HK | 40088863 | A0 | 06 October 2023 |
| CN | 112991502 | A | 18 June 2021 | HK | 40046386 | A0 | 05 November 2021 |
| CN | 112802161 | A | 14 May 2021 | None | | | |
| WO | 2022143179 | A1 | 07 July 2022 | CN | 112712578 | A | 27 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023106727201